# EUROPEAN PATENT SPECIFICATION

(11) **EP 2 122 499 B1**
(45) Date of publication and mention of the grant of the patent: **14.07.2010**
(21) Application number: 07726455.4
(22) Date of filing: 21.02.2007
(51) Int. Cl.: G06F 17/30

(54) **METHOD AND APPARATUSES FOR HANDLING STORAGE OF USER DATA IN 3G DIGITAL CELLULAR TELECOMMUNICATION SYSTEMS**
VERFAHREN UND VORRICHTUNG ZUR ABWICKLUNG DER SPEICHERUNG VON BENUTZERDATEN IN DIGITALEN ZELLULAREN 3G-TELEKOMMUNIKATIONSSYSTEMEN
PROCÉDÉ ET APPAREILS POUR TRAITER LE STOCKAGE DE DONNÉES D'UTILISATEUR DANS DES SYSTÈMES DE TÉLÉCOMMUNICATION CELLULAIRES NUMÉRIQUES 3G

(43) Date of publication of application: 25.11.2009
(73) Proprietor: Telefonaktiebolaget LM Ericsson (publ), 164 83 Stockholm (SE)
(72) Inventor: MONJAS LLORENTE, Miguel Ángel, E-28045 Madrid (ES); LORENZO HERNÁNDEZ, Manuel, E-28050 Madrid (ES)
(74) Representative: Elzaburu Marquez, Alberto
(86) International application number: PCT/EP2007/051663
(87) International publication number: WO 2008/101544

(56) References cited:
- WO-A-01/74029
- WO-A-99/23838
- ETSI: "Digital cellular telecommunications system; Universal Mobile Telecommunications System; IP Multimedia Subsystem" 3GPP TS 123.288 V7.6.0, December 2006 (2006-12), XP002438437 Sophia Antipolis, France cited in the application

## Description

### FIELD OF THE INVENTION

The present invention relates to information systems and, more precisely, to methods and apparatuses for handling storage of data in these systems.

### BACKGROUND

State-of-the-art information systems comprise information servers commonly implemented by computer-based machines which provide both: data storage, and the service logic to handle these data. Clients of the system (machines with or without intervention of human user) interact with these servers to, for example, obtain, set, modify, etc, these data, or also to request/cause further actions based on them.

The nature of the data held by an information system depends to a large extent on the kind of application(s) using said system or, in other words, the use(s) said system is intended for. The service logic in an information server comprise the processing rules for storing, retrieving or modifying, etc, these data, or also for taking further actions based on them. Nowadays, information systems are widely used for multiple purposes, therefore, the service logic usually depends to a large extent on the application(s) using the storage and processing resources of a particular information system. Nevertheless, the data handled by most of the information servers are usually indexed by one or more identifiers, so that some of the data are stored in relationship to one or more identifiers.

Accordingly, the clients can use identifiers as a key to send messages to an information server, which can then be processed therein according to the data (part or all) stored in relationship with the received identifier. Said processing comprises, for example, the information server providing back some of these data, and/or modify them, and/or take an action based on them, etc.

Modern telecommunications systems use to comprise, or make use of, information systems. For example, a telecommunications system providing dynamic registration capability, such as a GSM system, a UMTS system, or a IP Multimedia Subsystem (IMS), comprise servers called Home Location Registers HLR or Home Subscriber Servers HSS. A HLR or a HSS is an information server storing static and dynamic data of a user (e.g.: location information, user profile data, etc), which can be retrieved from, or modified by, messages received from information clients of the system, for example, from telecommunications nodes such as Mobile Switching Center/Visitor Location Registers (MSC/VLRs), Serving GPRS Support Nodes (SGSNs), Call Session Control functions (CSCFs), and also from application servers (ASs). In general, a message received by a HLR or a HSS is processed according to the data they handle in relationship with a user identifier received in the message.

A service provider SP providing, or intervening in the provision, of services through the Internet is another case of use of an information system. For example, a user can have a service account with the SP such that, once authenticated through the appropriate credentials, he can access to the services provided from that SP (e.g.: information services, booking a travel, mediation of an electronic payment with another SP, etc). For this purpose, the SP can use an information system comprising an information server where to store static data, such as user credentials for authentication and user profile data; or dynamic data, such as user log-on status and dynamic session information when the user is logged-on. An Authentication Authorization and Accounting AAA server is an example of an information server as described above.

For some uses, an information system is required to store a considerable quantity of data and also to process a huge number of messages requiring actions over these data. These factors use to condition the number of information servers in the information system, as well as their processing and reliability capabilities. For example, in case of a small telecommunications operator, a single HLR or HSS can suffice if the number of users subscribed to it does not exceed the storage and/or processing capabilities of said information server. However, as the number of subscribers increase, the information system must scale so as to adapt its processing and storing capabilities.

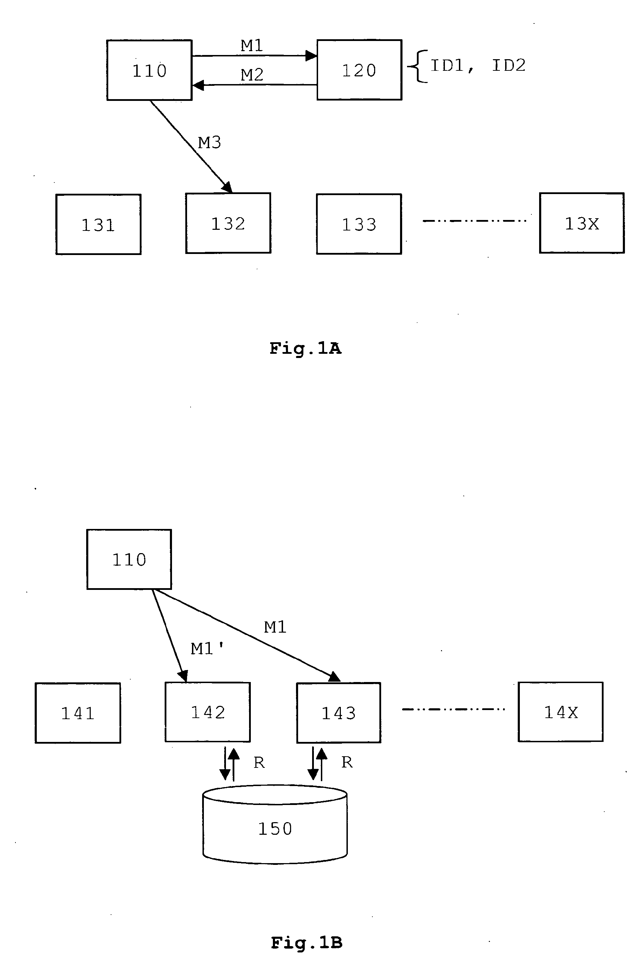

Basically, there are two alternative ways for achieving scalability although, to some extent, both comprise increasing the number of information servers. These alternatives are illustrated schematically in figures 1A and 1B, and shall now briefly described.

The first one (Fig.1A) comprises a "first" information server 120 and a plurality of "second" information servers 131..13X. The first information server 120 acts as a "location function" which is configured with a plurality of interrelated "first" and "second" identifiers. In short, a given first identifier ID1 is stored in relationship with a second identifier ID2, so that the second identifier identifies a given information server among the plurality of second information servers 131..13X which handle the data stored in relationship with the first identifier. In this arrangement, an information client 110 sends a message M1 comprising a first identifier ID1 to the first information server, which answers back with a reply M2 comprising the second identifier ID2. The client then uses this second identifier to redirect M3 the message to the corresponding second information server 132 handling the data stored in relationship with the first identifier.

This first way of achieving scalability is primarily suitable for (second) information servers integrating, both: a (usually) high data storage capacity, and the service logic, within the same machine. However, this solution tends to be expensive, as it requires specialized apparatus with high storage, high reliability and high processing capacities. Furthermore, every second information server has to be manually provisioned (configured) with all the data it can need for processing any message from an information client. Traditionally, information servers such as HLRs have been built based on this principle.

The advantage provided by this scalability solution is that an information client 110 can memorize the second identifier ID2 which is related to a given first identifier ID1, so that a further message M1' (not shown in Fig .1A) can be directly sent from said client 110 to the corresponding information server 132 and, thus, further signaling can be reduced. For example, for the time a given MSC/VLR, or a SGSN, or a Serving CSCF S-CSCF, is assigned to serve a registration of a user, it can cache the identifier of the HLR/HSS assigned to the user, so that further messages are directly addressed to it.

The 3GPP specification TS 23.228 V7.6.0 (Dec-2006) discloses on chapters 5.8 this kind of solution adapted to the IMS, wherein the "first" information server is a Subscription Locator Function SLF, and the "second" information servers are HSSs. However, the server acting as "first" information server (SLF in this case) needs to be configured with identifiers of the "second" information servers (HSSs in this case), as it is recognized on chapter 5.8.1 of TS 23.228 in the statement: *"The synchronisation between the SLF and the different HSSs is an O&M issue".* Ericsson product "Flexible Numbering Register" FNR (http://www.ericsson.com/products/hp/Flexible-Numbering-Reg ister_FNR_pa.shtml) is another example of this kind of solution adapted to mobile systems which, among other features, allows flexible allocation of subscription data among HLRs. Embodiments of a FNR are described, for example, in patent application WO9923838 As in the case of the SLF above, to perform its function, a FRN ("first" information server) needs to be configured with information of the HLRs ("second" information servers) assigned to the user identifiers it can receive in a message, or work in close cooperation with a database storing such information.

A second way (Fig.1B) for achieving scalability is based on decoupling the mere data storage from the service processing logic. This second way is usually known as "tiering". An information system arranged according to a tiered architecture comprises a plurality of information servers 141..14X, acting as processing front-ends, and a centralized storage 150 storing the data and accessible to these information servers. A tiered architecture simplifies the maintenance of data (configuration, provisioning), as the data to be maintained are not scattered through a plurality of second servers (as in the first alternative), but usually stored in a single centralized storage.

As opposed to the first alternative described above, in a tiering architecture an information client 110 can send a message M1 comprising an identifier to any of the information servers. Then, the information server which has been contacted (143 is illustrated in Fig.1B) accesses R the data stored in the centralized database 150 in relationship with said identifier, and processes the message according to all or part of them. The retrieved data are then discarded by the information server, since the next message from a client, requiring said data to be processed, can be sent to any other information server. A simple round-robin algorithm can be implemented in any information client (110) so as to achieve a processing load sharing between the available front-end information servers 141..14X. For example a subsequent message M1' comprising the same identifier, which can be sent from client 110, or from another client, can be addressed to another information server 142 that, for processing it, would need to access R the data stored in the centralized database 150 in relationship with said identifier.

A tiered architecture provides, as a major advantage, a separate dimensioning of resources for data storage and specialized processing; which allows, on the one hand, to use commercially available multi-purpose mass-storage database 150 and, on the other hand, to use "light-weight" front-end apparatus 141..14X for processing the signaling from the clients 110. However, the front-end information servers 141..14X always have to obtain user information from the centralized storage 150, which implies additional signaling for serving a message from an information client 110 and, thus, more delay.

### SUMMARY

In one aspect, the invention relates to a method for handling storage of data as claimed in claim 1. In further aspects, the invention also relates to information servers as claimed in claims 11 and 19, and to computer programs as claimed in claims 25 and 26. Embodiments of the invention are set out in the dependent claims.

According to the invention, the architecture for handling the data storage in an information system comprises, as in the first alternative described above, a first information server and a plurality of second information servers; so that, when the first information server receives a message comprising a first identifier, it sends a response comprising a second identifier identifying a second information server handling data stored in relationship with the first identifier. If there is not a second identifier related to the first identifier, the first server sends a message requesting to store in a second server data in relationship with the first identifier, and stores an identifier of the second server attending the request as the second identifier related to said first identifier.

By requesting from the first information server the storage of some data related to a given received identifier in a second server, and storing an identifier of the attending second server in relationship with said received identifier, it is not necessary to configure in the first information server by operation & maintenance procedures all the eventual relationship between: a plurality of identifiers that can be received, and the identifiers of the corresponding second servers handling data stored in relationship with them; since it becomes auto-configured in this aspect, as long as it receives messages comprising first identifiers for which there are no corresponding second identifiers stored. Furthermore, the novel features of the invention permit incorporating some advantages of a tiered architecture into architectures comprising first and second information servers as described above, without inheriting the disadvantage of its inherent delay, and allowing attending the request to store by any of the available second information servers.

According to one embodiment, the request to store can be sent from the first server to a second information server selected from the first server, or be sent to an allocation server arranged to make said selection. The server performing the selection is preferably aware about the load status of all the second information servers in the system, or it is arranged to perform a round-robin selection. This embodiment adapts the invention to information systems comprising, either: one, or more than one, first information servers; wherein the selection is preferably made by, respectively, the (only) first information server, or by the allocation server, which advantageously selects the most appropriate second server based on factors such as its current load or capabilities.

According to another embodiment, the second server, upon reception of the request to store, retrieves from an external database, which stores a plurality of data in relationship with a plurality of identifiers, at least part of the data stored therein in relationship with the received identifier, and stores internally the retrieved data in relationship with said identifier. This allows the second server to process further messages comprising said identifier according to the data it stores related to it, without having to retrieve them again from the external database until a new request to store is received. The external database can therefore be a master storage of the data which, advantageously, is not necessarily accessed from all the available second servers for processing all the messages they receive.

According to another embodiment, upon a notification of a change in any of the data it stores in relationship with a given identifier, the second server retrieves from the external database a changed data stored therein in relationship with said identifier and stores it internally. By adapting a second server as described herein, a proper processing of messages in second servers is assured, since the data necessary to process a message in a second server are synchronized with the corresponding data stored in the external database, which can be the master storage of these data.

According to another embodiment, when an information system comprises more than one information server acting as first information servers, a first information server, which has sent a request to store data in relationship with a given first identifier, sends to another server acting also as a first information server said first identifier in relationship with an identifier of the second server attending said request to store. In such a kind of information systems it is likely to have clients sending a message to any of the available first information servers. Therefore, this embodiment provides an automatic configuration of data in a first information server initiated from another first information server that allows the so configured first server answering a subsequent message comprising an identifier with the corresponding identifier of the second server. Furthermore, the embodiment prevents duplication of data storage in more than one second server of the data related to a given first identifier, since the so configured first server does not need to send a request to store to a second server, given that an identifier of a second server is already stored in relationship with said first identifier.

According to another embodiment, a server acting as a first information server is a Subscription Location Function server SLF or Flexible Numbering Register FNR, and a server acting as second information server is a Home Subscriber Server HSS or a Home Location Register HLR. Embodiments of the invention are thus advantageously applicable in the particular case of information servers used in telecommunications systems that provide mobility or dynamic registration capabilities to their users.

According to a further embodiment, the message received by the SLF comprising a first identifier is a query for handling a registration of a user, and said first identifier is an identifier assigned to said user. Accordingly, the SLF requests a HSS to store data related to said user, so as to serve from said HSS messages related to said user for said registration. An identifier of the HSS which is then assigned to serve said registration is stored in the SLF. According to yet another embodiment, the SLF receives a further identifier identifying also said user, which is stored by the SLF in relationship with the identifier of the assigned HSS. The further identifier is preferably received from the assigned HSS, which has retrieved and stored it as a part of the data related to said user. This allows the SLF to provide the identifier of the assigned HSS when it receives a further message comprising any identifier assigned to said user, such as said first identifier or said further identifier.

According to a further embodiment, the SLF receives a message notifying a de-registration of said user and, responsive to it, the SLF removes the identifier of the HSS stored in relationship with an identifier identifying said user. The message is preferably received from the HSS that has processed a de-registration message of said user, and its processing in a SLF helps to keep consistency between the information it handles with regard to the identifier(s) identifying a user and the current HSS storing data related to said user when, advantageously, the HSS has free the storage resources it allocated for said user at deregistration. Furthermore, since the identifier of a HSS is removed in the SLF, a further registration of said user is not necessarily attended by the same HSS.

### BRIEF DESCRIPTION OF THE DRAWINGS

Figures 1A and 1B illustrate schematically two known architectures for achieving scalability for handling data storage in an information system.
Figure 2 illustrate schematically an architecture for achieving scalability for handling data storage according to one embodiment of the invention.
Figure 3 shows a schematic representation of some functional modules of a first information server and of a second information server according to one embodiment of the invention.
Figure 4 shows a flowchart illustrating some steps of a method for handling storage of data according to one embodiment of the invention.
Figures 5A to 5D show simplified signaling flows illustrating some embodiments of the invention.

### DETAILED DESCRIPTION

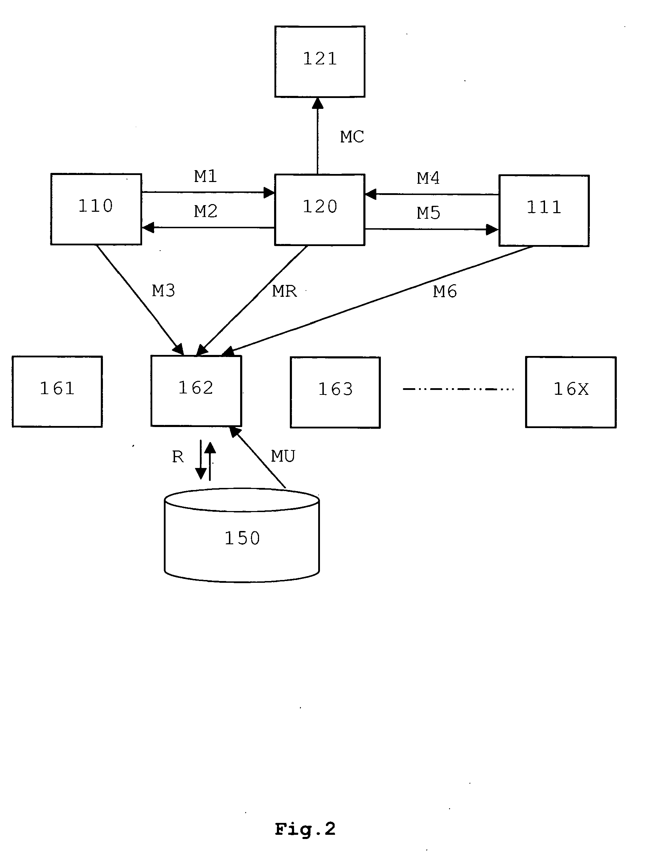

Exemplary embodiments of the invention shall now be described with reference to figures 2 to 5D.

When the information clients interact very frequently with an information system, it can be advisable distributing the messages received from the clients, and its subsequent processing, among the available information servers. However, there can be applications in which, for example, the information to be delivered, or, more generally, the information used to process the requests of the clients, is preferably kept in a centralized storage. Said centralized storage, that can be implemented across several cooperating databases, may be used as a master data repository where the data are updated from a management/configuration system; thereby allowing also take advantage of reliability and cost efficiency features provided by some commercially available multipurpose relational databases. Also, depending on the applications using an information system, the requests from the information clients can come through different communication protocols, such as: Hypertext Transfer Protocol HTTP, Session Initiation Protocol SIP, Mobile Application Part MAP, Remote Authentication Dial In User Service RADIUS, DIAMETER, etc. However, commercially available multipurpose databases use to support a more limited set of protocols, such as Structured Query Language SQL, or Lightweight Directory Access Protocol LDAP. Besides, the processing logic in an information server (e.g. a HSS) uses to depend on the particular application(s) said server is intended for (e.g. provide, and act upon, user information in an IMS system), while details related to the storage of the data held by said server use to be more application independent.

These factors favour the use of a tiered architecture comprising a plurality of information servers sided with an external database. As referred earlier with reference to Fig. 1B, these servers can be anywise contacted from the information clients, and comprise, essentially, protocol means for exchanging messages with the information clients, and processing means for processing them according to the data they always retrieve from an external database.

A -say- lightweight information server suited for a tiered architecture could cache some data it has retrieved from the centralized storage for processing a received message, so as to improve its response time the next time a message is received which, for its processing, might require the obtainment of said data. However, this could result in a vain use of its eventual storage resources (usually small compared with the ones provided by specialized mass-storage databases), since nothing ensures it will receive such a message in a reasonable time, given the free server selection utility provided by tiered architectures.

Fig.2 represents a generic information system according to one embodiment of the invention which, advantageously, combines features of the architectures explained earlier with reference to figures 1A and 1B, and provides further benefits.

The schematic illustration represents: a first information server 120, a plurality of second information servers 161..16X, and a database 150 representing a centralized storage. The second information servers 161..16X are arranged for communicating with a plurality of information clients (represented by 110 and 111), and for handling the data stored in relationship with a plurality of identifiers. These data are primarily stored in database 150. The information server 120 provides relationships between first and second identifiers as described earlier with reference to Fig. 1A. In this case, the server 120 is arranged to provide the identifier of the second information server that handles transactions concerning data stored in relationship with an identifier which is received in a message from an information client. Information servers 161..16X can be similar to servers 131..13X, as described earlier with reference to Fig. 1A, or similar to servers 141..14X, as described earlier with reference to Fig.1B; in either case enhanced so as to accomplish with embodiments of the invention. However, preferably, information servers 161..16X are lightweight front-end information servers ,as servers 141..14X, modified so as to carry out embodiments of the invention.

Another information server 121 is shown in Fig.2, which performs a similar function as server 120. For example, some information clients can be arranged for sending primarily messages to server 120 and others to server 121. Also, the information clients can be arranged to send messages to any of servers 120 or 121, e.g., in order to distribute the traffic load. A brief description of the operation of the information servers illustrated in Fig.2 shall now be given.

The information client 110 sends a message M1 to information server 120 comprising a given identifier. The identifier is, for example, usable as a key to identify some data related to it which are primarily stored in the centralized storage 150. The message can, for example, request some of these data, and/or can require a certain processing based on some of these data, and/or can cause a modification in some of these data. At reception of M1, server 120 checks whether there is an identifier of any of the second servers 161..16X stored in relationship with an identifier received in the message M1. For this purpose, server 120 can check an internal storage, or an external storage accessible to it. In this example case, it is assumed there is not such an identifier. Next, server 120 sends a message MR to server 162 requesting to store therein data related to the identifier received in message M1. The request to store message MR can convey an identifier received in the message M1, or another identifier related to said received identifier, such that it also is usable to identify the same data primarily stored in the centralized storage 150.

According to the illustrated embodiment, the request to store MR is shown as sent directly from the first server 120 to the second server 162. The second server can be selected from the first server 120 randomly, or attending to any suitable load-sharing algorithm. For example, when necessary (e.g. at reception of messages from clients), it can select sequentially among the available second servers, or make said selection based on load status information of the second servers. An alternative or additional further selection criterion can be based on the (implicit or explicit) type of request on a received message (M1), so as to select a second server which can be suitable for its processing. Another possible embodiment (not illustrated in Fig.2) for the selection of a second server can comprise sending the request to store MR to an allocation server arranged to make said selection, which can be particularly advantageous in information systems comprising more than one first information servers as server 120. In any case, there can be a confirmation message sent to the first server 120 as a reply to the request to store M (flow not shown in Fig.2).

An identifier of the second information server 162 attending the request to store MR is stored by the first server 120 in relationship with an identifier it had received in message M1, and/or an identifier related to said received identifier. The storage is preferably made in an internal storage of server 120, although it can be also made in an external database accessible to it. Thereafter, when server 120 receives a further message from an information client (110, 111) comprising the same identifier it had received in message M1 (or related to it), it can answer directly to said message with an identifier of server 162, and no further request to store MR is sent.

The way an identifier of the second server attending the request is determined in the first server 120 can also vary depending on some of the embodiments described above. For example, if a direct selection is made from server 120, and no reply message from the selected second server (e.g. 162) is expected, then an identifier already held by first server 120 related to the selected second server can be used. The same can apply where, for example, a reply is expected which does not contain an identifier of the selected second server. If, for example, a reply to the request to store MR is expected, either: directly from the selected second server, or from an allocation server (not shown in Fig.2); said reply can convey an identifier of said second server, which can then be stored by the first server 120.

At reception of the request to store MR, the server 162 retrieves from the database 150 at least part of the data stored in relationship with an identifier comprised in the request MR, and stores these data internally. This allows server 162 processing further messages comprising certain identifiers faster, since the necessary data have been retrieved from database 150, and stored internally, upon requests of first information server 120. The usage of internal storage resources in a second server, such as server 162, can thereby be optimized since, advantageously, a request to store MR is sent from a first server 120 when it is likely that the data which are retrieved and stored in server 162 are going to be needed soon for processing a message addressed to said server 162.

In flow M2, the server 120 answers to the information client 110 with a reply comprising an identifier of the selected second server 162. According to some protocols, the reply M2 can be a redirect message of the previously received message M1. The information client 110 can then use the identifier received from server 120 for sending a message M3 (that can be similar to the one it previously had sent to the first server 120, M1) towards the information server 162, which will finally process it according to the data retrieved from database 150 upon the request MR. The final time for processing the request from an information client can be optimized if, for example, the server 120 sends the request to store MR and the response M2 close in time, since this can cause flow R to be run shortly before flow M3; thereby, allowing information server 162 to store the necessary data just before an eventual message needing them is going to be received.

Depending on the application (which uses to condition details related to the used protocol and signaling flows), the processing of message M3 can involve a further message from server 162 to client 110 (not shown in Fig.2). Also, depending on the nature of the application, some data retrieved in server 162 upon request MR of server 120 can be discarded once a message comprising an identifier indexing them is received (e.g. M3), or kept for a certain time afterwards, or kept until a further message is received (for example, from information client 110), as will be later described. Preferably, when an information server discard all data retrieved from the centralized storage 150 upon request MR, it notifies to the server which requested said storage (e.g. 120), which allows the latest to remove the corresponding identifier(s) relationship.

In summary, the storage upon request feature of the invention provides a dynamic handling of data that allows the use of lightweight second information servers. Since only the data needed for processing the messages that will be received from information clients in a second server are locally loaded therein, the local storage resources in said server, as well as their processing and communication resources, can be dimensioned according to the estimated dynamically assigned load. The advantages of this dynamic handling are further improved by allowing a second information server to free storage resources (and, thus, optimize their use) without risk of data inconsistency when, e.g. due to the processing of a received message, it considers some data it stores related to a given identifier are no longer needed; as a notification of this event can be sent to the first information server, which will make it to update a relationship between (first and second) identifiers accordingly.

Once server 162 has been requested MR to store some data, the first information server 120 can send a message MC towards another first information server 121 comprising: an identifier of server 162, and an identifier received in message M1 (or related to it); so as to allow establishing also in server 121 a relationship between these identifiers.

This will permit server 121 to answer directly a further message it could receive from an information client (110, 111) with the identifier of the corresponding second server, without requiring (MR) unnecessarily a second server (161..16X) to retrieve data from database 150 and store them internally.

Server 120 can, afterwards, receive a message M4 comprising the same identifier it had received in message M1, or an identifier related to it. Since it had stored, in relationship with said identifier, an identifier of second server 162, a further request to store (MR) is not necessary and, thus, it can send immediately a reply M5 comprising an identifier of second server 162 that client 111 can use for routing a message M6 to server 162, which shall then process it without requiring accessing R to database 150. A similar situation would occur if the message M4 was addressed to first server 121, since, according to the embodiment described earlier, it would had received from server 120 the relationship between these identifiers.

Messages illustrated in Fig.2 can be coded according to many communication protocols, as cited earlier. However, in particular for a second information server (161..16X) a message M3, M6 from an information client, comprising an identifier, and requiring processing according to data related to said identifier, is distinguishable from a message MR requesting explicitly the local storage of data related to a given identifier. This can be accomplished, e.g., by defining a new type of message in a communication protocol supported by a second information server, by using an already existing message with an extendable content, etc. Some protocols, such as DIAMETER, are easily extendable, as they are devised for allowing the inclusion of new kind of contents.

The centralized storage 150 can be a master data repository where the data are updated from a management/configuration system, or for an application server arranged to update some data related to a given identifier. In such a case, second information servers (161..16X) are preferably adapted to receive a notification of a change in any of the data they had retrieved R previously and stored in relationship with a given identifier. For example, the centralized storage 150 can send a message MU notifying server 162 a change of the data stored in relationship with a certain identifier. In order to avoid further signaling, the message MU preferably comprise at least said identifier and the data that have been subject to change since the last retrieval (R) of data, which are then updated in information server 162 accordingly. This advantageous feature can be accomplished by a second server (e.g. 162) subscribing in centralized storage 150 to changes in certain data related to a given identifier, for example, when it retrieves R upon request MR some of these data. The centralized storage 150 can thus store information about the second information servers which have retrieved (R) data related to a certain identifier, so as to notify MU any change accordingly. Alternatively, a notification MU can be sent from the centralized storage 150 to all the second servers (161..16X) which have access to it; thereby, allowing a second server to update its locally stored data accordingly.

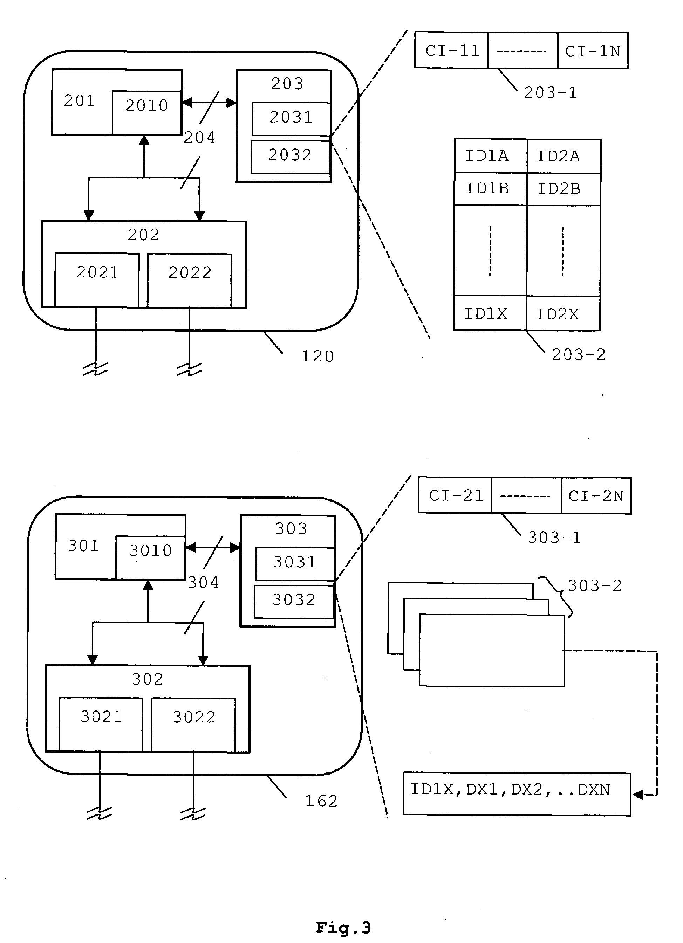

The internal simplified structure of a first information server 120 and a second information server 162, as described above with reference to Fig.2, shall now be described with reference to Fig.3 considering a possible implementation as computer-based apparatuses, which, as in most of the modern information systems, is a preferred implementation for information servers.

An information server, such as: a HLR, a HSS, a SLF, etc, regardless its specific construction details, may be considered as an apparatus comprising functional modules, each of them arranged to perform a specific (sub)function of the total functionality implemented by said information server. In some implementations, the functionality of a given information server may be distributed across various physical machines; each performing a part of its total functionality.

In particular, an information server 120 or 162, implemented as a computer-based apparatus comprises software and hardware, which can be located within a physical machine, or distributed along various physical machines. A specific functional module of any of said servers implemented as a computer-based apparatus may comprise: software, hardware, or a combination of both; wherein said functional module is designed to perform a specific (sub)function of the information server and, if proceeds, to cooperate with software and/or hardware parts which implements other of its functional modules. The software can comprise one or more computer programs (computer readable program code) that, when executed by a computer-based apparatus makes it to behave according to a predefined manner, as determined by the specific program instructions of the computer code of said programs, which is in accordance to the specific functionality of the information server it implements.

Once the functionality of a given information server has been defined (e.g. by a telecommunications standard, or other kind of technical document), the construction of the functional modules to build up a realization of the corresponding physical machine(s) is a matter of routine work for those skilled in the art.

Accordingly, the explanation given with reference to Fig.3 shall describe some functional components of information servers 120 and 162 without falling into specific construction details concerning the possible physical realizations, which are well known by those skilled and, consequently, not needed to understand the invention.

The simplified internal structure shown in Fig.3 for the first information server 120 comprises: a processing module 201, a communications module 202, a data storage module 203 and internal communication bus 204 which allow data communication and cooperation between them. A similar structure is shown for a second information server 162 comprising: a processing module 301, a communications module 302, a data storage module 303 and internal communication bus 304.

Any of the processing modules (201, 301) can comprise one or more processors (2010, 3010) which, for example, can be arranged to work in load-sharing or active-backup mode.

Assuming the scenario illustrated in Fig.2, processor 2010 in server 120 executes service logic for handling the signaling messages exchanged with information clients 110, 111, and, according to the invention, also with second information servers 161..16X. In particular, when a message is received in server 120 from an information client 110, said service logic comprises answering it with another message comprising an identifier of a second information server (e.g. server 162) which handles data stored in relationship with an identifier received in the message from the client 110. The service logic executed by processor 2010 is further enhanced with the novel functions of the invention, as described heretofore, and also as later detailed with regard to some specific embodiments.

Processor 3010 in second information server 162 executes service logic for handling data stored in relationship with an identifier. More precisely, when a message is received from an information client 110 comprising an identifier, the service logic executed by processor 3010 processes it according to at least part of the data stored in relationship with said identifier. Details of said processing depend on the nature/content of the message, and uses to be quite dependent on the application/use of the information system. For example, the processing can imply: that some of these data are to be given back to the client as a reply, and/or that some of these data are modified according to some further (implicit or explicit) content of the message, and/or that some further actions are taken from server 162 based on these data. The service logic executed by processor 3010 is further enhanced with the novel functions of the invention, as described heretofore, and also as later detailed with regard to some specific embodiments.

Communications between the first information server 120 and other entities (such as: information clients 110, 111; second information servers 161..16X; other information servers acting as first information server, like server 121; etc) are performed via communications module 202, illustrated in Fig.2 as comprising two communication devices 2021 and 2022. Similarly, communications between second information server 162 and other entities (e.g.: 110, 111, 120, 150) are performed via communications module 302, illustrated in Fig.2 as comprising two communication devices 3021 and 3022. In general, when a message is received by the communications module, it transfers the relevant content to the processing module for triggering the necessary processing, and, when a message is to be sent, the processing module requests the communications module to send the message and provides it with the necessary data.

Depending on implementation alternatives, some of the communication devices (2021, 2022, 3021, 3022) can be devoted to a specific kind of communication; for example: only with some other entity with which a standardized or proprietary signaling interface is used, only for a given type of communication protocol, etc. Also, depending on implementation details, some of the communication devices of information servers 120 or 162 (or any software or hardware of its components) may be suited to handle any kind of the communication that may be carried out by any of these servers according to more than one communication protocol. For example, in the particular case of IMS, the protocol used between an information client 110 (e.g. a CSCF in role of "interrogating, I-CSCF, or in role of "serving", S-CSCF) and a first information server 120 (e.g. a SLF) or a second information server 162 (e.g. a HSS) is the "DIAMETER" protocol (IETF RFC3588, September 2003). This communication protocol (as well as other protocols) can be easily extended/modified for allowing conveyance of new or modified contents, so as to allow communications between a first information server 120 and a second information server 162 for accomplishing with the embodiments of the invention.

Data storage modules 203 and 303 store the data needed for the operation of, respectively, first information server 120 and second information server 162. A data storage module in a computer-based information server can comprise one or more data storage devices. In the example illustrated in Fig.3, data storage module 203 in server 120 comprises storage devices 2031 and 2032, and data storage module 303 in server 162 comprises storage devices 3031 and 3032. Memory chips and magnetic or optical discs are example of data storage devices. Depending on criteria such as data access speed for certain data, storage reliability, etc, the storage module of an information server can comprise one or more storage devices of the same or different kind.

The operation of information server 120 is controlled by computer-readable program code 203-1 comprising instructions (CI-11..., CI-1N) that, when executed by processor 2010, makes it to perform as a first information server described earlier with reference to Fig.1A, and also performing new functions according to embodiments of the invention, some of which were already described with reference to Fig.2.

Reference 203-2 represents an allocation table, preferably stored locally in information server 120, which stores relationships between first and second identifiers. The first identifiers (ID1A, ID1B..ID1X), illustrated on the left, represent identifiers that can be received in a message from an information client 110, 111; and the second identifiers (ID2A, ID2B..ID2X), illustrated on the right, represent the corresponding identifiers usable to address the second information server 161..16X that handles data stored in relationship with a first identifier. For example, if server 120 is a SLF, and servers 161..16X are HSSs, then, a first identifier ID1A can represent a private or public user identifiers of a user subscribed to a IMS system, and the related second identifier ID2A can be an identifier usable to address the corresponding HSS (161..16X) handling user subscription and location information of said user. Accordingly, although Fig.3 illustrates in table 203-2 a one-to-one relationship between a first identifier (e.g. ID1B) and a corresponding second identifier (e.g. ID2B), there can be various first identifiers, related among them, and related to the same second identifier. For example, the same HSS can hold data about a plurality of IMS subscribers, and a given subscriber can have more than one (first) identifier assigned to him.

The features of the invention allows that some or all the entries in the allocation table 203-2 are allocated dynamically, without the intervention of a management/configuration system and, thus, become auto-configured in run time; as long as the first information server 120 receives messages comprising a first identifier for which there is no a corresponding second identifier stored in relationship. Therefore, not only the second identifiers (ID2A, ID2B..ID2X) are auto-configured as described earlier, but also entries of the first identifiers (ID1A, ID1B..ID1X) in the table 203-2 can be stored by server 120, for example, in case a message from an information client is received comprising a given (first) identifier not stored beforehand and for which there is not stored a corresponding second identifier.

The operation of information server 162 is controlled by computer-readable program code 303-1 comprising instructions (CI-21..., CI-2N) that, when executed by processor 3010, makes it to perform as a second information server as described earlier with reference to figures 1A or 1B, and also performing new functions according to embodiments of the invention, some of which were already described with reference to Fig.2.

Reference 303-2 represents a plurality of data records. Each of these records stores data related to one, or more, related identifiers. These records are preferably stored in server 162 upon request MR of a first information server, such as server 120. For example, if information server 162 is a HLR or a HSS, the content (ID1X, DX1, DX2..DXN) of a given record RCD-X can comprise: one or more identifiers of a user (ID1X), which can be received in messages from information clients (e.g. a MSC/VLR, a I-CSCF, a S-CSCF, an application server, etc) for further processing them according to some of the data stored therein in relationship (DX1, DX2..DXN); such as: information about the registration status of a user, information about the node currently assigned to serve signaling to said user (e.g. an identifier of a S-CSCF), user profile data, etc.

A given data record RCD-X stored in server 162 upon request MR of a first information server 120 can further comprise, or is stored in relationship to, an identifier usable to address a communication to said first information server. This allows that, for example, in case server 162 removes record RCD-X from its storage, the first server 120 updates its allocation table 203-2 by removing the identifier of server 162 for the corresponding (first) identifier(s). Similarly, if the request to store MR is sent through an allocation server, and it is foreseeable that a second server removes data that were loaded upon request MR, the necessary data so as to allow notify the removal event, either: directly to the first information server 120, or through the allocation server, can be stored in the corresponding record RCD-X.

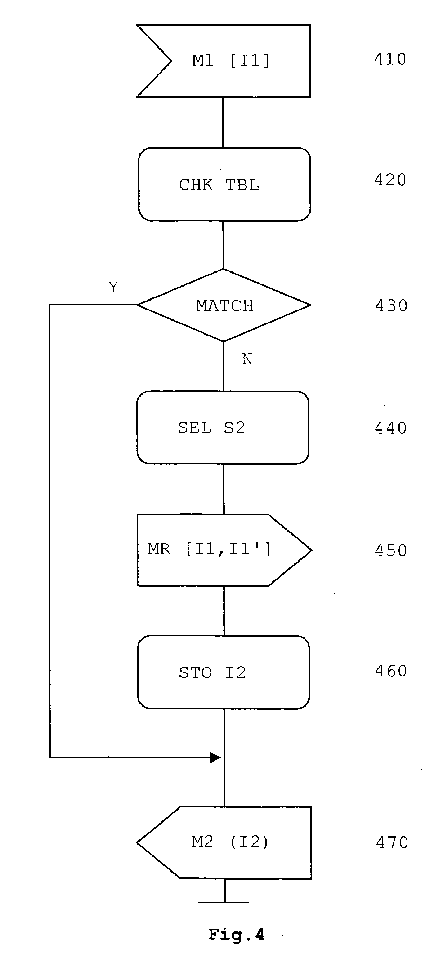

Fig.4 illustrates some steps of a method for handling the storage of data according to one embodiment of the invention. For simplicity, Fig.4 only illustrates steps performed in a first information server, for example, server 120 in Fig.2.

In step 410 a message M1 is received comprising, among other eventual data, a first identifier I1. Next, in step 420 the first server 120 checks, for example, an allocation table as described earlier, for determining whether there is a second identifier stored in relationship with the received first identifier. If the check yields in 430 a positive result Y, the execution continues in step 470 by sending a response M2 comprising, among other eventual data, said second identifier I2. The second identifier I2 that is provided in the response M2 is usable to address a further message (e.g. M3 in Fig.2) to the second information server (e.g. server 162) that handles data stored in relationship with the first identifier I1, and which can then process said further message according to these data. The check can also yield a positive result if, for example, the allocation table already stores a further first identifier I1' related to the received first identifier I1, for which there is already stored a second identifier I2 of a second information server.

If the check yields a negative result N in 430, the execution continues in step 440 by selecting from the first information server a second information server for storing data related to the received first identifier I1. For accomplishing with this embodiment, the first information server can keep a list of eventually available second servers (161..16X). For example, said list can be used by the first server for performing e.g. round-robin or random selections, or to keep individual current load information of said servers, and/or individual capabilities; so as to perform the selection of step 440 according with the required criteria.

Next, a request to store message MR is sent towards the selected second server in step 450. The message can comprise the first identifier I1 received in step 410, and/or other related first identifier I1', and conveys a request to store in the selected second server data that are related to an identifier I1/I'1 included in the message MR, or related to it. Subsequently, or after receiving a confirmation response from the selected second server (step not shown in Fig.4), the first server stores in step 460 an identifier I2 of said second server in relationship with the received first identifier I1, and in step 470 sends a reply M2 to the message M1 comprising said identifier I2. Step 460 can comprise the updating of the aforementioned allocation table, whereby next time the first server receives a further message comprising the same identifier I1 in a subsequent step 410, the check 420 will yield a positive result Y that will permit a direct execution of step 470.

It shall be noticed that the sequence of steps: 450, 460 and 470, as shown in Fig.4, illustrate only a possible realization, and that, for example, step 470 can be executed before than step 450.

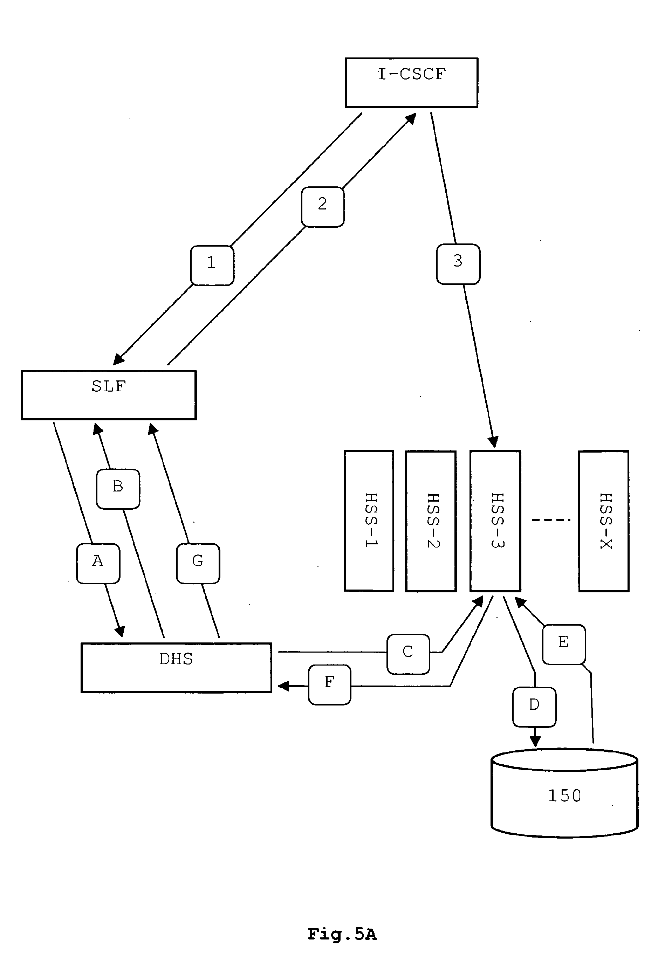

Figures 5A to 5D illustrate advantageous embodiments of the invention applied to a IP Multimedia system IMS. However, as will be apparent to the skilled person, some of these embodiments are also applicable in other service scenarios wherein, for handling the storage of data, first and second information servers as described heretofore are used.

Each of the figures 5A to 5D illustrates a particular service usage case of an information system comprising SLF servers and HSS servers in IMS. For simplicity, not all the eventual nodes intervening in the signaling of these service cases, nor all the signaling messages till their completion, are shown. Instead, flows in these figures have been limited so as to allow a clearer understanding of these embodiments to those familiar with the architecture and procedures disclosed for IMS in 3GPP specifications. In particular, details related to the service usage cases referred hereinafter are provided in 3GPP specifications TS 23.228 (referred earlier) and TS 29.228 V7.3.0 (Sept. 2006). For distinguishing in figures 5A to 5D standard messages sent through the standardized "Cx" and "Dx" interfaces (respectively, signaling interfaces between a CSCF and a HSS, and between a CSCF and a SLF) from new signaling messages for accomplishing with the invention, the former are referenced by a number, and the later by a letter.

All the example cases in figures 5A to 5D are illustrated showing a dynamic allocation server DHS arranged for selecting a HSS among a plurality of HSSs (HSS-1..HSS-X) according to any of the aforementioned selection criteria. As mentioned before, this embodiment can be particularly advantageous when a IMS system comprises more than one SLF. For simplicity reasons, only one SLF is shown in these figures. However, the functions described in these examples as performed by the DHS, can be assumed as performed by novel functionality implemented by a SLF.

Figure 5A shows the allocation of a HSS upon registration of a user in a IMS system.

According to one embodiment, the allocation of a HSS for a user is performed during the IMS registration process upon reception of a DIAMETER message User-Authorization-Request UAR from an Interrogating CSCF I-CSCF.

Flow 1 represents a UAR message comprising a public identifier pub-ID and a private identifier priv-ID of the registering user. The SLF answers in flow 2 with a DIAMETER error message that comprises an identifier of the selected HSS (HSS-3). Then, the I-CSCF sends in flow 3 a UAR message to HSS-3 which processes it according to the data it has loaded upon request from the SLF (flows A,C, later described). In particular, the processing of the UAR message in a HSS, as well as the processing of all the messages received in a HSS through "Cx" or "Dx" interfaces, is detailed in 3GPP specification TS 29.228.

The illustrated example assumes that the user is not yet registered and, therefore, the SLF does not have in record any HSS identifier related to an identifier of said user. Accordingly, the SLF sends a request to store A to the DHS. The request aims to get a HSS to load the necessary related data for serving the registration of said user in the IMS, and it can include the public-ID and/or the private-ID received in the original UAR (flow 1). The request to store A can further comprise information indicating that it is sent in relationship with a registration request (UAR). Upon reception of the request A, the DHS executes a selection procedure (e.g. according to any of the previously described examples) for choosing an HSS that will subsequently handle messages coming from information clients (I-CSCF, S-CSCF, Application Servers, etc) related to said user; i.e. comprising an identifier of said user.

Once a HSS (HSS-3 in the example) is selected, the DHS sends a reply B to the SLF comprising an identifier of the HSS-3. Upon reception of this information, the SLF stores it, for example, in an internal allocation table, in relationship with an identifier (or various identifiers) of said user. Subsequently, the SLF sends a response in flow 2 towards the I-CSCF as described above.

The reply B, and, subsequently, flow 2, does not need to wait any kind of request to be sent towards the selected HSS-3, nor a confirmation reply from said HSS. Advantageously, a request to store C, comprising similar content as described before for the request A, is sent towards the selected HSS-3 close in time to the reply B, so as to avoid the response 2 to the I-CSCF to be delayed.

At reception of the request C, the HSS-3 retrieves (flows D, E) the necessary data from the centralized storage 150, for example, using SQL. The HSS-3 can, e.g. according to information received in C, retrieve all the data stored therein in relationship with a received identifier of the user, or just a part of them. For example, if the request C indicates "registration", for attending a UAR that subsequently can be received in HSS-3 from the I-CSCF, not all the eventual user data that might be stored on 150 are usually needed.

In IMS, the concept "public-ID" refers to an identifier of a user (or also a service) that can be used by other users to refer to said user in a similar manner as done in legacy telephony systems with the "telephone numbers"; for example, to request the establishment of a communication. Chapter 4.3.3 in the aforementioned specification TS 23.228 discloses the nature and use of public-IDs (as well as of private-IDs) in IMS. In short, a IMS user can be "called" from other users by means of his "public-ID". In some cases, a given IMS user can have assigned a plurality of public-IDs, some of which can be subject to "implicit registration". Namely, they can become registered even though they are not explicitly contained in the registration signaling (e.g. a Session Initiation Protocol SIP message REGISTER, or a DIAMETER message UAR). Flow F represents a message sent, for example, as an acknowledgement of the request C, and comprising the public-ID(s) of the registering user which are subject to implicit registration. Accordingly, the DHS forwards the implicitly registered public-ID(s) to the SLF in flow G. Alternatively, the implicitly registered public-ID(s) could be sent within the reply B (e.g. if reply B is sent after reception of flow F). If no DHS exists, the HSS-3 could send the public-ID(s) of the registering user which are subject to implicit registration directly to the SLF (e.g. flow F directly addressed to the SLF).

The implicitly registered public-ID(s) are then stored by the SLF in relationship with the identifier(s) received in flow 1, and the identifier of the selected HSS-3. This feature allows the SLF to reply a further message received from a CSCF (either I-CSCF or S-CSCF) which could comprise any of these identifiers with the identifier of HSS-3 without sending a further request to store (flow C).

If there are more than one SLF, the DHS preferably forwards the corresponding identifiers (i.e. related user identifiers and the corresponding HSS identifier) to these SLFs; thereby allowing these SLF to answer directly, without further (unnecessary/redundant) request to store (e.g. flow A) to be sent.

As cited earlier, part of the signaling illustrated in Fig.5A can run in parallel. For example, as soon as the identifier of the selected HSS is determined, or known, in the SLF a reply 2 to the first message 1 can be sent towards the requesting node (I-CSCF), which allows shortening the final execution time. As an example, flow B does not necessarily need to wait any confirmation to flow C. In particular, implicit registered public-IDs can be received (flows F and G) later, since in case of registration, they are not needed by the requesting I-CSCF. Accordingly, an asynchronous processing as described herein is preferably applied, since it can allow HSS-3 to load (D, E) the necessary data while, for example, flows B and 2 take place.

According to standardized registration procedures, further flows occur, which are not shown in Fig.5A for simplicity. However, some of them shall now be commented to illustrate some further embodiments of the invention.

For example, a reply (User-Authorization-Answer, UAA) to flow 3 (UAA) of Fig.5A is sent from the HSS-3 to the I-CSCF. This reply comprises, either: an identifier of a S-CSCF suitable to attend the registration, or information allowing the I-CSCF to perform a selection of such a S-CSCF. The necessary data for attending this request from the I-CSCF have been loaded by HSS-3-from the centralized storage 150 (flows D, E). The I-CSCF further forwards the registration request (a SIP message REGISTER) to the selected S-CSCF, which then queries the SLF for obtaining an identifier of the HSS assigned to the registering user. An identifier of the user is used in said query. As the SLF has stored (as described above) the identifier of HSS-3, the S-CSCF receives it and contacts the HSS for, among other purposes, downloading user data which are needed for its particular processing. The HSS-3 stores then an identifier of the selected S-CSCF attending the registration of said user, by storing an identifier of the S-CSCF in relationship with an identifier of the user.

The HSS-3 can load and store all the data related to a given user upon request (C) until, for example, said user is unregistered. However, there can be factors that can make HSS-3 to, preferably, discard some of these data once they have been used therein for processing. For example, the storage capacity in a HSS front-end (such as HSS-3) can be a issue. Also, given a tiered structure for the data storage and processing (e.g. as shown in Fig.2), the master copy of the data are preferably kept by a centralized storage 150, which is to be known to, and contacted by, provisioning/management systems entitled to set and/or modify these data.

For example, the S-CSCF capabilities, or a fixed S-CSCF name that can be needed to reply the request 3 of the I-CSCF can be discarded by HSS-3 once the corresponding reply (UAA) is sent back to said I-CSCF. Similarly, once the selected S-CSCF has downloaded the user data it needs for its local processing (DIAMETER message Server-Assignment-Answer, SAA), HSS-3 can discard them. Accordingly, in some cases, it can be advantageous that the HSS-3 keeps permanently stored, until a de-registration of a user is processed, only data such as: the current registration status of one or more public-IDs of said user, authentication status, and an identifier of the S-CSCF assigned to serve his registration; in summary, data that can be needed for attending immediately (i.e. without querying storage 150) a further message that can be received, such as a re-registration or a query for establishing an incoming session addressed to said user. Other data can be loaded if necessary, or upon request.

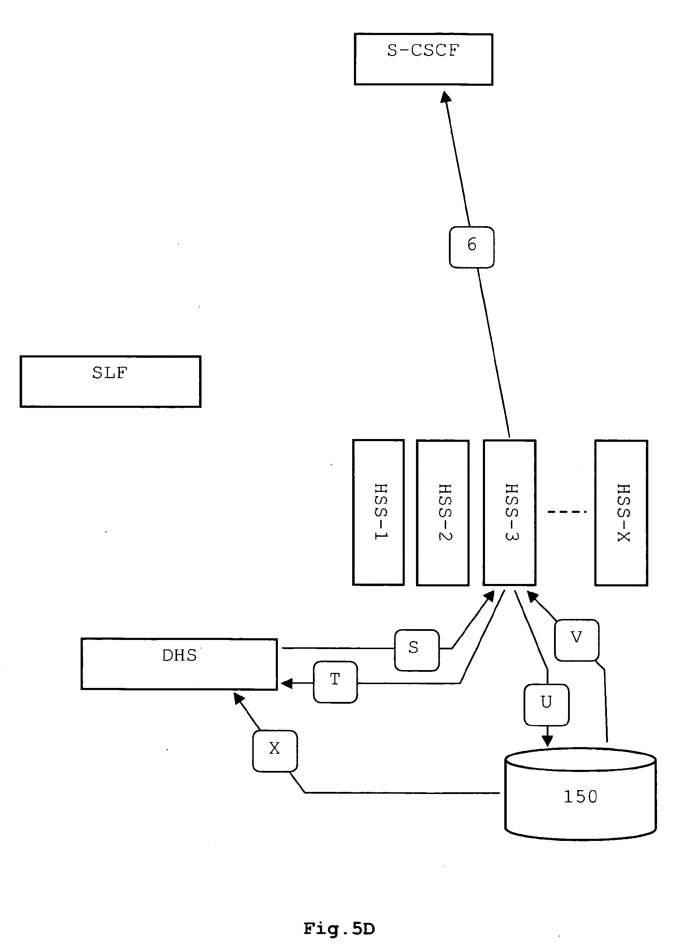

In order to synchronize its dynamically loaded data, with the master copy stored in a centralized storage 150, the HSS-3 can subscribe to any change related to data stored therein in relationship with a given identifier. The HSS-3 can do so explicitly, e.g., in flow D. Alternatively, the centralized storage can set a trigger (e.g. when flows D, E are run) to notify HSS-3 about any change in the retrieved data. If there is a DHS, as illustrated in Fig.5A, the notification of a change can be reported from the storage 150 to the DHS (that should be then implicitly or explicitly subscribed to any change), which should then notify accordingly to the corresponding (assigned) HSS instance (e.g. HSS-3). Details related to this embodiment shall be later described with reference to Fig.5D.

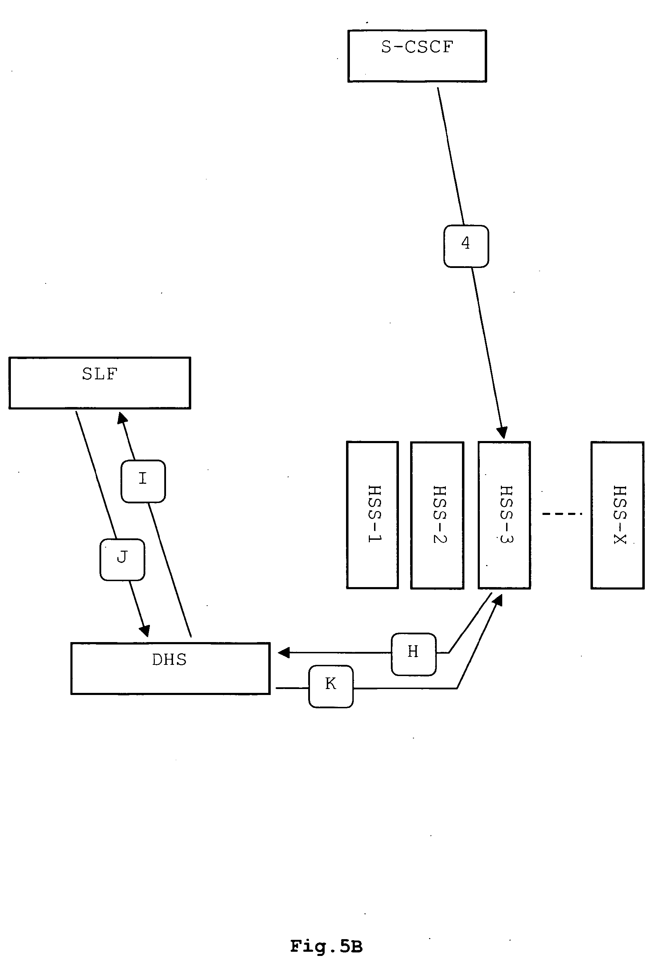

Figure 5B shows the de-allocation of a HSS upon deregistration of a user in a IMS system.

A user from a terminal can request deregistration from the IMS system by means of a SIP message REGISTER indicating deregistration. This message gets an I-CSCF which then queries a SLF with the received user identifier(s) and obtains as a reply an identifier of the assigned HSS. When the HSS is then subsequently queried from the I-CSCF it replies with an identifier of the S-CSCF currently assigned to serve said user for the identifier(s) he is deregistering. Finally, the assigned S-CSCF receives the deregistration request from the I-CSCF and processes it. Said processing involves notifying the deregistration event to the corresponding HSS, which is accomplished by means of a DIAMETER message Server-Assignment-Request SAR, as illustrated in Fig.5B by flow 4.

When the deregistration is processed by the HSS-3, it contacts the DHS in flow H so for indicating the deregistration of a user. The message H can comprise a transaction identifier (e.g. previously agreed in flows C, F of Fig.5A), and/or a concerned identifier of the user. The DHS then notifies the event to the SLF(s) in flow I. Alternatively, if no DHS exists, flow H can be sent directly to the SLF. Flows J and K represent optional acknowledgement messages.

As a result, the HSS-3 discards the data it had retrieved previously from the storage 150, thus freeing the internally stored record(s), and the SLF at reception of flow I removes the identifier of HSS-3 stored in relationship with the related user identifier(s).

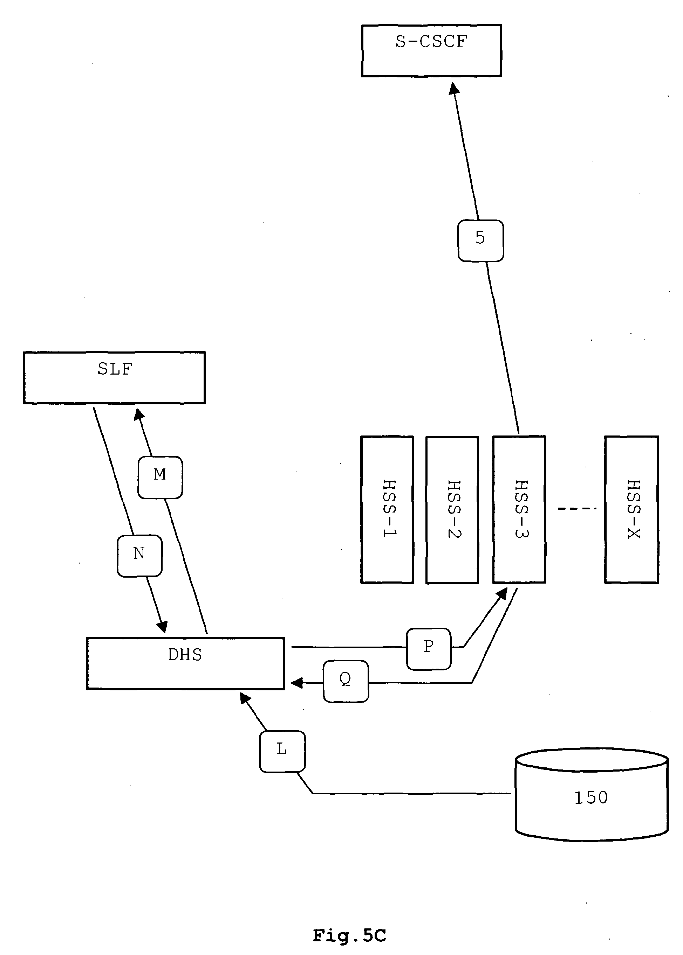

Figure 5C shows the de-allocation of a HSS upon an administrative deregistration of a user in a IMS system. An administrative registration of one or more identifiers of a user in a IMS system can take place because, for example, the payment account of the user is out of credit, because fraudulent use is suspected, etc.

According to 3GPP IMS specifications, the HSS allocated for handling data related to a given IMS user contacts with the assigned S-CSCF (if any) to deregister one (or more) identifiers of the user which are subject of an administrative deregistration. This is accomplished by sending a DIAMETER Registration-Termination-Request RTR message, which is illustrated in Fig.5C with flow 5.

In order to update the information in the SLF, which is acting as a first information server providing the identifier of HSS-3 for messages comprising the affected identifier(s) of the affected user, various alternatives can be envisaged.

For example, the HSS-3 can be advantageously modified so as to receive a deregistration order from a management server, and notify said event to the SLF. However, according to the embodiment illustrated in Fig.5C, the administrative deregistration order is originally received in the centralized storage 150 (flow not shown in Fig.5C). A message notifying the event is then sent to the DHS in flow L. If there is a server such as the DHS described above, the centralized storage 150 can be configured with an identifier of said DHS. Alternatively, if no DHS exists, the centralized storage could contact the HSS that originally loaded the data (i.e. it kept that information, or a transaction identifier previously agreed), and said HSS would then notify the deregistration to the SLF that requested said data to be loaded, which would then remove the identifier of HSS-3 stored in relationship with the user identifier(s) affected by the administrative deregistration.

In flow M the DHS notifies the deregistration to the SLF that requested the data to be loaded (flow A in Fig.5A), and the SLF then removes the identifier of the HSS assigned to the affected identifier(s) being administratively deregistered. In flow P, the DHS notifies HSS-3 about the administrative deregistration, so as to remove the corresponding data stored therein in relationship with the affected identifier(s); thus, allowing freeing its storage resources, as further messages from information clients are no longer expected to be received in HSS-3 comprising these identifier(s). Alternatively, a similar notification as in flow P could be sent to HSS-3 from the SLF. The HSS-3, at reception of the notification P, request deregistration of the concerned user to the concerned S-CSCF by sending a RTR message in flow 5, as described earlier.

If more than one SLF exist that were notified about a relationship between user identifiers and assigned HSS, the DHS (or the illustrated SLF, in absence of DHS) could notify them about the deregistration (flows not shown in Fig. 5C). Flows N and Q illustrate optional acknowledgement messages. Notifications M and P can be sent in parallel.

In order to improve its efficiency, a SLF preferably stores locally the relationships between first and second identifiers. Features of the invention, as described for example with reference to figures 5A to 5C, allow using less storage resources in a SLF, since, as opposed to a traditional static configuration, only identifiers and identifier relationships needs to be stored for users registered in the IMS. The application of this advantageous feature is not limited to a IMS system; rather, it can equally be applied to other kind of information system comprising first and second information servers (e.g., as described earlier with reference to Fig.2), wherein, preferably, data related to a given identifier are stored in a second information server upon request from a first information server, and wherein the second information server is updated when the relationship between said identifier and said data storage changes.

Figure 5D shows a situation wherein some user profile data of a IMS subscriber are updated, e.g. by O&M procedures, in the centralized storage 150.

Several situations can cause some subscription and/or profile data of a IMS user to be changed, for example: the user become ascribed to or removed from a given service, another SIP application server SIP-AS is assigned to perform a high-level processing of the signaling related to a terminal of said user, some criteria for triggering service execution from a S-CSCF to a SIP-AS have changed, etc. In these situations, preferably, the centralized storage 150 is acting as a master data repository of a plurality of users of the IMS system of a network operator. Accordingly, a simplified provisioning procedure can comprise sending provisioning messages (flows not shown in Fig.5D) from a provisioning server to only the centralized storage 150 for modifying (i.e. setting and/or changing) the necessary data.

When some data related to a given user identifier (e.g. a public or private ID of a IMS user) are modified in the centralized storage 150, a notification can be sent in flow X to the DHS. The notification can comprise said identifier. If there is a server such as the DHS described above, the centralized storage 150 can be configured with an identifier of said DHS. Alternatively, if no DHS exists, the centralized storage could contact the HSS that originally loaded the data (i.e. it kept the necessary information), and said HSS would then notify accordingly to the concerned S-CSCF, as will be later described.

The illustrated embodiment considers that the DHS receives the notification of data modification (flow X), and then notifies in flow S to the HSS (HSS-3) that had stored upon request the data which are now subject to modification. Alternatively, the DHS could query the SLF (e.g. with an identifier received in flow X) so as to obtain an identifier of the concerned HSS (flow not shown in Fig.5D). The embodiment illustrated in Fig.5D considers that the notifications of user data modification (flows X and S) do not comprise the data that is/are subject to setting and/or change. Therefore, the HSS-3 communicates with the centralized storage 150 (flows U and V) for obtaining the necessary data, which then updates accordingly on its internal storage. Alternatively, the centralized storage can send the data that have been subject to modification in flow X, which will then make unnecessary flows U and V. If, for example, some data in the service profile of a IMS user have been modified in the centralized storage 150, according to different embodiments the centralized storage can provide the HSS with, either: only the modified data, or the whole user profile data.

As user profile data have been subject to modification, in flow 6, the HSS-3 updates the S-CSCF assigned to serve signaling related to the concerned user for the concerned identifier(s). Since said S-CSCF had downloaded from the HSS-3 user profile data of said user at registration (flows not shown in Fig. 5A) for its operation, it is now updated from HSS-3 in flow 6. In IMS, flow 6 can be accomplished by means of a DIAMETER message Push-Profile-Request PPR.

Flow T represents an optional acknowledgement, which can be sent from the HSS immediately to reception of flow S, or after retrieval of data in flows U, V, or after accomplishing with the updating of the S-CSCF.

A further advantage not mentioned so far, which can be obtained based on embodiments of the invention, relates to pricing criteria for acquiring some kind of servers from technology providers.

Typical pricing criteria when selling an information server, such as a HSS or a HLR, use to be related to the maximum number of users whose subscription data can be configured/provisioned therein. In a tiered architecture, this can be controlled, for example, by establishing in the centralized storage to which the HSS or HLR front-ends access to retrieve or update these data a variable controlling the maximum number of usage licenses. For example, said variable can be used to limit the maximum number of users whose data can be provisioned in the centralized storage, and/or the maximum number of simultaneous users whose data can be held by a given HSS or HLR front-end, and/or the maximum number of users whose data can be simultaneously held by all the available front-ends. However, what commonly provides a benefit for the operator of, e.g., a telecommunications system is not necessarily related to the maximum number of users that can be configured on its information servers, but the use said users made of the services provided by or through said system.

An information server such as a SLF, modified according to the invention, can implement an advantageous usage-control mechanism; which could allow a license-controlled acquisition price based on usage-rate, rather than merely in the number of configured users. This can be particularly advantageous for newcomer information service providers or newcomer telecommunications operators.

For example, in case of a IMS system, a simplified implementation could comprise configuring a value in a SLF related to the maximum usage of the HSSs. Then, the SLF could maintain a counter that, e.g., would be increased with every request to store sent to a HSS at registration (e.g. Fig.5A), and decreased with deregistrations notified from a HSS (e.g. figures 5B or 5C). The value of the counter should then be checked in the SLF against the maximum usage value before sending a request to store to a HSS. Alternative, if a server such as the DHS exists, this control could be implemented therein. This feature would then allow establish a per-use pricing rather than a percapacity pricing. This advantageous feature is not limited to the particular characteristics of use in a IMS systems, and can equally apply to other kind of information system comprising first and second information servers (e.g., as described earlier with reference to Fig.2) wherein data related to a given identifier are stored in a second information server upon request from a first information server.

Currently, information servers are commonly implemented in computer-based machines. Accordingly, computer programs comprising computer-readable program codes are loaded in computer-based machines causing them to behave according to a predefined manner, as determined by the respective program codes, which are in accordance to the specific functionality required for the information servers these machines implement. Thus, those skilled in creating and/or modifying computer programs, would, without departing of the teachings of the present invention, readily apply them to create and/or modify computer programs suitable to be loaded in a computer-based information server, so as to make it to behave according to any of the described embodiments.

The invention has been described with respect to some exemplary embodiments in an illustrative and non-restrictive manner. Variations can be readily apparent to those of ordinary skill in the art. For this reason, the invention is to be interpreted and limited in view of the claims.

## Claims

1. A method for handling storage of data comprising the steps of:
a) receiving (410) in a first information server (120) a message (M1) comprising a first identifier, and
b) sending (470) from the first server a response (M2) to said message comprising a second identifier stored in relationship with said first identifier,
wherein the second identifier identifies a second information server (162) handling data stored in relationship with said first identifier; **CHARACTERIZED in that** it further comprises the steps of:
c) sending (450) from the first information server a message (MR) requesting to store in a second information server data in relationship with a first identifier when there is not a second identifier stored in relationship with said first identifier, and
d) storing (460) by the first server an identifier of the second server attending said request to store as the second identifier related to said first identifier.

2. The method of claim 1 wherein the step "c" comprises the step of:
c1) sending said request to store message to a second server selected from said first server.

3. The method of claim 1 wherein the step "c" comprises the step of:
c2) sending (A) said request to store message to a dynamic allocation server (DHS) arranged for selecting a second server among a plurality of second servers, and further comprising the steps of:
e) sending from the dynamic allocation server to a second information server selected from the allocation server a message (C) requesting to store in said second server data in relationship with said first identifier, and
f) sending from the dynamic allocation server to the first information server a response (B) to said request to store message comprising an identifier of the selected second server.

4. The method of claim 1 further comprising the steps of:
g) responsive to the reception of the request to store message in the second server, retrieving (R) from an external database (150) storing a plurality of data in relationship with a plurality of identifiers at least part of the data stored therein in relationship with the received first identifier, and
h) storing in the second server the retrieved data in relationship with said first identifier.

5. The method of claim 4 further comprising the steps of:
i) receiving in the second server a message (MU, X) notifying a change in a data stored in relationship with said first identifier,
j) retrieving from the external database a changed data stored therein in relationship with said first identifier, and
k) storing in the second server the retrieved changed data in relationship with said first identifier.

6. The method of claim 1 further comprising the step of:
l) sending a message (MC) to another first information server (121) comprising said first and second identifiers, and
m) storing in said another first information server said first identifier in relationship with said second identifier.

7. The method of claim 1, wherein the first information server is a Subscription Location Function server or a Flexible Numbering Register, and the second information server is a Home Subscriber Server or a Home Location Register.

8. The method of claim 7, wherein the step "a" comprises the step of:
a1) receiving a query (1) for handling a registration of a user identified with said first identifier.

9. The method of claim 8 further comprising the steps of:
n) receiving in the Subscription Location Function server a message (G) comprising a third identifier identifying said user, and
p) storing in the Subscription Location Function said first and third identifiers in relationship with said second identifier, for answering a further message that can be received comprising any of said first or third identifiers with a message comprising said second identifier.

10. The method of claims 8 or 9 further comprising the steps of:
q) receiving in the Subscription Location Function server a message (I, M) notifying a de-registration of said user, and
r) removing in the Subscription Location Function server the second identifier stored in relationship with an identifier identifying said user.

11. Information server (120) for providing a relationship between a first (ID1X) and a second identifier (ID2X), comprising a processor (2010) and a storage device (2031) in communication with said processor and storing instructions (203-1) adapted to be executed by said processor to:
- receive a message (M1) comprising a first identifier, and
- send a response (M2) to said message comprising a second identifier stored in relationship to said first identifier, wherein the second identifier identifies a second information server (162) handling data stored in relationship with said first identifier; **CHARACTERIZED in that** the storage device further stores instructions adapted to be executed by said processor to:
- send a message (MR) requesting to store in a second information server data in relationship with a first identifier when there is not a second identifier stored in relationship with said first identifier, and
- store an identifier of the second server attending said request to store as the second identifier related to said first identifier.

12. The information server of claim 11 wherein the storage device further stores instructions adapted to be executed by said processor to send said request to store message to a second server selected from said first server.

13. The information server of claim 11 wherein the storage device further stores instructions adapted to be executed by said processor to:
- send said request to store to a dynamic allocation server (DHS) arranged for selecting a second server among a plurality of second servers, and
- receive a response (B) to said request to store message comprising an identifier of the selected second server.

14. The information server of claim 11 wherein the storage device further stores instructions adapted to be executed by said processor to send a message (MC) comprising said first and second identifiers to another information server (121) arranged for providing a relationship between a first and a second identifier.

15. The information server of claim 11 wherein the second information server is a Home Subscriber Server or a Home Location Register, and wherein the storage device further stores instructions adapted to be executed by said processor to perform as a Subscription Location Function or as a Flexible Numbering Register.

16. The information server of claim 15 wherein the message received comprising a first identifier is a query (1) for handling a registration of a user identified with said first identifier.

17. The information server of claim 16 wherein the storage device further stores instructions adapted to be executed by said processor to:
- receive a message (G) comprising a third identifier identifying said user, and
- store said first and third identifiers in relationship with said second identifier, for answering a subsequent message that can be received comprising any of said first or third identifiers with a message comprising said second identifier.

18. The information server of claims 16 or 17 wherein the storage device further stores instructions adapted to be executed by said processor to:
- receive a message (I, M) notifying a de-registration of said user, and
- remove the second identifier stored in relationship with an identifier identifying said user.

19. Information server (162) for handling data stored in relationship with an identifier (ID1X), comprising a processor (3010) and a storage device (3031) in communication with said processor and storing instructions (303-1) adapted to be executed by said processor to:
- receive a message (M3) comprising an identifier and requiring processing of data related to said identifier, and
- retrieve (R) from an external database (150) storing a plurality of data in relationship with a plurality of identifiers at least part of the data stored therein in relationship with said identifier, so as to process the received message according to at least part of the retrieved data;
**CHARACTERIZED in that** the storage device further stores instructions adapted to be executed by said processor to:
- receive a message (MR) requesting to store data in relationship with an identifier,
- retrieve (R) from the external database at least part of the data stored therein in relationship with said identifier, and
- store in a database (303-2, RCD-X) internal to said information server at least part of the retrieved data, so as to process a subsequent message (M3, M6) requiring processing of data related to said identifier according to at least part of said internally stored data.

20. The information server of claim 19 wherein the storage device further stores instructions adapted to be executed by said processor to:
- receive a message (MU, X) notifying a change in a data stored in relationship with said identifier,
- retrieve from the external database a changed data stored therein in relationship with said identifier, and
- store in said internal database the retrieved changed data in relationship with said identifier.

21. The information server of claim 19 wherein the storage device further stores instructions adapted to be executed by said processor to perform as a Home Subscriber Server or as a Home Location Register.

22. The information server of claim 21 wherein the message comprising an identifier is a query (1) for handling a registration of a user identified with said identifier.

23. The information server of claim 22 wherein the data retrieved from the external database comprise another identifier identifying said user, and wherein the storage device further stores instructions adapted to be executed by said processor to send a message (F) comprising said another identifier to a Subscription Location Function server.

24. The information server of claims 22 or 23 wherein the storage device further stores instructions adapted to be executed by said processor to:
- send to a Subscription Location Function server a message (H) notifying a de-registration of said user, and
- remove from the internal database data stored in relationship with an identifier identifying said user.

25. A computer program for providing a relationship between a first and a second identifier in a computer-based information server (120) comprising:
- a computer-readable program code for processing the reception of a message (M1) comprising a first identifier, and
- a computer-readable program code for sending a response (M2) to said message comprising a second identifier stored in relationship to said first identifier, wherein the second identifier identifies a second information server (162) handling data stored in relationship with said first identifier;
**CHARACTERIZED in that** it further comprises:
- a computer-readable program code for sending a message (MR) requesting to store in a second information server data in relationship with a first identifier when there is not a second identifier stored in relationship with said first identifier, and
- a computer-readable program code for storing an identifier of the second server attending said request to store as the second identifier related to said first identifier.

26. A computer program for handling data stored in relationship with an identifier in a computer-based information server (162) comprising:
- a computer-readable program code for processing the reception of a message (M3) comprising an identifier and requiring processing of data related to said identifier, and
- a computer-readable program code for retrieving (R) from an external database (150) storing a plurality of data in relationship with a plurality of identifiers at least part of the data stored therein in relationship with said identifier, so as to process the received message according to at least part of the retrieved data;
**CHARACTERIZED in that** it further comprises:
- a computer-readable program code for processing the reception of a message (MR) requesting to store data in relationship with an identifier,
- a computer-readable program code for retrieving (R) from the external database at least part of the data stored therein in relationship with said identifier, and
- a computer-readable program code for storing in a database (303-2, RCD-X) internal to said information server at least part of the retrieved data, so as to process a subsequent message (M3, M6) requiring processing of data related to said identifier according to at least part of said internally stored data.

## Patentansprüche

1. Verfahren zur Handhabung der Speicherung von Daten, mit folgenden Schritten:
a) Empfangen (410) einer Meldung (M1), die einen ersten Identifizierer aufweist, in einem ersten Informations-Server (120), und
b) Senden (470) einer auf die Meldung ergehenden Antwort (M2), die einen zweiten Identifizierer aufweist, der in Bezug zu dem ersten Identifizierer gespeichert ist, aus dem ersten Server, wobei der zweite Identifizierer einen zweiten Informations-Server (162) identifiziert, der in Bezug zu dem ersten Identifizierer gespeicherte Daten handhabt;
**dadurch gekennzeichnet,**
**dass** das Verfahren ferner folgende Schritte enthält:
c) Senden (450) einer Meldung (MR) mit der Aufforderung, Daten in Bezug zu einem ersten Identifizierer in einem zweiten Informations-Server zu speichern, wenn kein zweiter Identifizierer existiert, der in Bezug zu dem ersten Identifizierer gespeichert ist, aus dem ersten Informations-Server, und
d) Speichern (460) eines Identifizierers des die Aufforderung befolgenden zweiten Servers zur Speicherung als in Bezug zu dem ersten Identifizierer stehendem zweiten Identifizierer, durch den ersten Server.

2. Verfahren nach Anspruch 1, bei dem der Schritt "c" den folgenden Schritt enthält:
c1) Senden der Aufforderung zum Speichern der Meldung an einen zweiten Server, der aus dem ersten Server gewählt ist.

3. Verfahren nach Anspruch 1, bei dem der Schritt "c" den folgenden Schritt enthält:
c2) Senden (A) der Aufforderung zum Speichern der Meldung an einen dynamischen Zuordnungs-Sever (DHS), der zum Wählen eines zweiten Servers unter mehreren zweiten Servern ausgebildet ist,
und ferner folgenden Schritt enthält:
e) aus dem dynamischen Zuordnungs-Server an einen aus dem Zuordnungs-Sever gewählten zweiten Informations-Server, Senden einer Meldung (C) mit der Aufforderung, in dem zweiten Server Daten zu speichern, die in Beziehung zu dem ersten Identifizierer stehen, und
f) aus dem dynamischen Zuordnungs-Server an den ersten Informations-Server, Senden einer Antwort (B) auf die Aufforderung zum Speichern einer Meldung, wobei die Antwort einen Identifizierer des gewählten zweiten Servers aufweist.

4. Verfahren nach Anspruch 1, ferner mit folgenden Schritten:
g) als Reaktion auf den Empfang der Aufforderung zum Speichern der Meldung in dem zweiten Server, Aufrufen (R), aus einer externen Datenbasis (150) heraus, in der mehrere Daten in Bezug auf mehrere Identifizier gespeichert sind, mindestens eines Teils der Daten, die darin in Bezug auf den empfangenen ersten Identifizierer gespeichert sind, und
h) in dem zweiten Server, Speichern der aufgerufenen Daten in Bezug zu dem ersten Identifizierer.

5. Verfahren nach Anspruch 4, ferner mit folgenden Schritten:
i) in dem zweiten Server, Empfangen einer Meldung (MU, X), die eine Änderung in einem Datenwert angibt, der in Bezug auf den ersten Identifizierer gespeichert ist, und
j) aus der externen Datenbasis, Aufrufen eines geänderten Datenwerts, der darin in Bezug zu dem ersten Identifizierer gespeichert ist,
k) in dem zweiten Server, Speichern des aufgerufenen geänderten Datenwerts in Bezug zu dem ersten Identifizierer.

6. Verfahren nach Anspruch 1, ferner mit folgendem Schritt:
l) Senden der Meldung (MC), welche die ersten und zweiten Identifizierer aufweist, an einen weiteren ersten Informations-Server (121), und
m) in dem weiteren ersten Informations-Server, Speichern des ersten Identifizierers in Bezug zu dem zweiten Identifizierer.

7. Verfahren nach Anspruch 1, bei dem der erste Informations-Server ein Subscription Location Function Server oder ein Flexible Numbering Register ist und der zweite Informations-Server ein Home Subscriber Server oder ein Home Location Register ist.

8. Verfahren nach Anspruch 7, bei dem der Schritt "a" folgenden Schritt aufweist:
a1) Empfangen einer Anfrage (1) zum Handhaben einer Registrierung eines durch den ersten Identifizierer identifizierten Users.

9. Verfahren nach Anspruch 8, ferner mit folgenden Schritten:
n) Empfangen einer Meldung (G), die einen den User identifizierenden dritten Identifizierer aufweist, in dem Subscription Location Function Server, und
p) Speichern der ersten und dritten Identifizierer in Bezug auf den zweiten Identifizierer, in dem Subscription Location Function Server, um eine weitere Meldung, die empfangen werden kann und die jeden der ersten und dritten Identifizierer aufweist, mit einer Meldung zu beantworten, die den zweiten Identifizierer aufweist.

10. Verfahren nach Anspruch 8 oder 9, ferner mit folgenden Schritten:
q) Empfangen einer Meldung (I,M), die eine De-Registrierung des Users mitteilt, in dem Subscription Location Function Server, und
r) Entfernen des in Bezug auf einen den User identifizierenden Identifizierers gespeicherten zweiten Identifizierers in dem Subscription Location Function Server.

11. Informations-Server (120) zum Herstellen einer Beziehung zwischen einem ersten (ID1X) und einem zweiten Identifizierer (ID2X), mit einem Prozessor (2010) und einer Speichervorrichtung (2031), die in Kommunikation mit dem Prozessor steht und Instruktionen (203-1) speichert, die von dem Prozessor ausgeführt werden können, um:
- eine Meldung (M1) zu empfangen, die einen ersten Identifizierer aufweist, und
- eine Antwort (M2) auf die Meldung zu senden, die einen zweiten Identifizierer aufweist, der in Bezug auf den ersten Identifizierer gespeichert ist, wobei der zweite Identifizierer einen zweiten Informations-Server (162) identifiziert, der in Bezug auf den ersten Identifizierer gespeicherte Daten handhabt;
**dadurch gekennzeichnet,**
**dass** die Speichervorrichtung ferner Instruktionen speichert, die von dem Prozessor ausgeführt werden können, um:
- eine Meldung (MR) mit der Aufforderung zu senden, in einem zweiten Informations-Server Daten in Bezug auf einen ersten Identifizierer zu speichern, wenn kein zweiter Identifizierer in Bezug auf den ersten Identifizierer gespeichert ist, und
- einen Identifizierer des die Aufforderung zum Speichern handhabenden zweiten Servers als den in Bezug zu dem ersten Identifizierer stehenden zweiten Identifizierer zu speichern.

12. Informations-Server nach Anspruch 11, bei dem die Speichervorrichtung ferner Instruktionen speichert, die von dem Prozessor ausgeführt werden können, um die Aufforderung zum Speichern der Meldung an einen zweiten Server zu senden, der aus dem ersten Server gewählt ist.

13. Informations-Server nach Anspruch 11, bei dem die Speichervorrichtung ferner Instruktionen speichert, die von dem Prozessor ausgeführt werden können, um:
- die Aufforderung zum Speichern an einen dynamischen Zuordnungs-Sever (DHS) zu senden, der zum Wählen eines zweiten Servers unter mehreren zweiten Servern ausgebildet ist,
- eine Antwort (B) auf die Aufforderung zum Speichern der Meldung zu empfangen, wobei die Antwort einen Identifizierer des gewählten zweiten Servers aufweist.

14. Informations-Server nach Anspruch 11, bei dem die Speichervorrichtung ferner Instruktionen speichert, die von dem Prozessor ausgeführt werden können, um eine Meldung (MC), welche die ersten und zweiten Identifizierer aufweist, an einen weiteren Informations-Server (121) zu senden, der eine Beziehung zwischen einem ersten und einem zweiten Identifizierer herstellt.

15. Informations-Server nach Anspruch 11, bei dem der zweite Informations-Server ein Home Subscriber Server oder ein Home Location Register ist und bei dem die Speichervorrichtung ferner Instruktionen speichert, die von dem Prozessor ausgeführt werden können, um als Subscription Location Function Server oder ein Flexible Numbering Register zu arbeiten.

16. Informations-Server nach Anspruch 15, bei dem die einen ersten Identifizierer aufweisende empfangene Meldung eine Anfrage (1) zum Handhaben einer Registrierung eines durch den ersten Identifizierer identifizierten Users ist.

17. Informations-Server nach Anspruch 16, bei dem die Speichervorrichtung ferner Instruktionen speichert, die von dem Prozessor ausgeführt werden können, um:
- eine Meldung (G) zu empfangen, die einen den User identifizierenden dritten Identifizierer aufweist, und
- die ersten und dritten Identifizierer in Beziehung zu dem zweiten Idenfizierer zu speichern, um eine anschließende Meldung, die empfangen werden kann und die jeden der ersten und dritten Identifizierer aufweist, mit einer Meldung zu beantworten, die den zweiten Identifizierer aufweist.

18. Informations-Server nach Anspruch 16 oder 17, bei dem die Speichervorrichtung ferner Instruktionen speichert, die von dem Prozessor ausgeführt werden können, um:
- eine Meldung (I,M) zu empfangen, die eine De-Registrierung des Users mitteilt, und
- den in Bezug auf einen den User identifizierenden Identifizierer gespeicherten zweiten Identifizierer zu entfernen.

19. Informations-Server (162) zum Handhaben von Daten, die in Bezug auf einen Identifizierer (ID1X) gespeichert sind, mit einem Prozessor (3010) und einer Speichervorrichtung (3031), die in Kommunikation mit dem Prozessor steht und Instruktionen (303-1) speichert, die von dem Prozessor ausgeführt werden können, um:
- eine Meldung (M3) zu empfangen, die einen Identifizierer aufweist und das Verarbeiten auf den Identifizierer bezogener Daten verlangt, und
- aus einer externen Datenbank (150), in der mehrere Daten in Beziehung zu mehreren Identifizieren gespeichert sind, mindestens einen Teil der darin gespeicherten Daten aufzurufen (R), um die empfangene Meldung entsprechend mindestens einem Teil der aufgerufenen Daten zu verarbeiten;
**dadurch gekennzeichnet,**
**dass** die Speichervorrichtung ferner Instruktionen speichert, die von dem Prozessor ausgeführt werden können, um:
- eine Meldung (MR) mit der Aufforderung zu empfangen, Daten in Bezug auf einen Identifizierer zu speichern,
- aus der externen Datenbasis mindestens einen Teil der darin in Bezug auf den Identifizierer gespeicherten Daten aufzurufen (R), und
- mindestens einen Teil der aufgerufenen Daten in einer intern in dem Informations-Server angeordneten Datenbasis (303-2, RCD-X) zu speichern, um eine nachfolgende Meldung (M3,M6) zu verarbeiten, die das Verarbeiten auf den Identifizierer bezogener Daten entsprechend mindestens einem Teil der intern gespeicherten Daten verlangt.

20. Informations-Server nach Anspruch 19, bei dem die Speichervorrichtung ferner Instruktionen speichert, die von dem Prozessor ausgeführt werden können, um:
- eine Meldung (MU, X) zu empfangen, die eine Änderung in einem Datenwert angibt, der in Bezug auf den Identifizierer gespeichert ist, und
- aus der externen Datenbasis einen geänderten Datenwert aufzurufen, der darin in Bezug zu dem Identifizierer gespeichert ist,
- in der internen Datenbasis den aufgerufenen geänderten Datenwert in Bezug zu dem ersten Identifizierer zu speichern.

21. Informations-Server nach Anspruch 19, bei dem die Speichervorrichtung ferner Instruktionen speichert, die von dem Prozessor ausgeführt werden können, um als Home Subscriber Server oder ein Home Location Register zu arbeiten.

22. Informations-Server nach Anspruch 21, bei dem die einen Identifizierer aufweisende empfangene Meldung eine Anfrage (1) zum Handhaben einer Registrierung eines durch den Identifizierer identifizierten Users ist.

23. Informations-Server nach Anspruch 22, bei dem die aus der externen Daten-Basis aufgerufenen Daten einen weiteren den User identifizierenden Identifizierer aufweisen, und bei dem die Speichervorrichtung ferner Instruktionen speichert, die von dem Prozessor ausgeführt werden können, um eine Meldung (F), die den weiteren Identifizierer aufweist, an einen Subscription Location Function Server zu senden.

24. Informations-Server nach Anspruch 22 oder 23, bei dem die Speichervorrichtung ferner Instruktionen speichert, die von dem Prozessor ausgeführt werden können, um
- an den Subscription Location Function Server eine Meldung (H) zu senden, die eine De-Registrierung des Users mitteilt, und
- Daten, die in Bezug auf einen den User identifizierenden Identifizierer gespeichert sind, aus der internen Datenbasis zu entfernen.

25. Computerprogramm zum Herstellen einer Beziehung zwischen einem ersten und einem zweiten Identifizierer in einem computer-basierten Informations-Server (120), mit:
- einem computerlesbaren Programmcode zum Verarbeiten des Empfangs einer Meldung (M1), die einen ersten Identifizierer aufweist, und
- einem computerlesbaren Programmcode zum Senden einer auf die Meldung ergehenden Antwort (M2), die einen zweiten Identifizierer aufweist, der in Bezug zu dem ersten Identifizierer gespeichert ist, wobei der zweite Identifizierer einen zweiten Informations-Server (162) identifiziert, der in Bezug zu dem ersten Identifizierer gespeicherte Daten handhabt;
**dadurch gekennzeichnet,**
**dass** das Computerprogramm ferner enthält:
- einen computerlesbaren Programmcode zum Senden einer Meldung (MR) mit der Aufforderung, Daten in Beziehung zu einem ersten Identifizierer in einem zweiten Informations-Server zu speichern, wenn kein zweiter Identifizierer existiert, der in Bezug zu dem ersten Identifizierer gespeichert ist, und
- einen computerlesbaren Programmcode zum Speichern eines Identifizierers des die Aufforderung befolgenden zweiten Servers zur Speicherung als in Bezug zu dem ersten Identifizierer stehendem zweiten Identifizierer.

26. Computerprogramm zum Handhaben von in Bezug zu einem Identifizierer gespeicherten Daten in einem computer-basierten Informations-Server (162), mit:
- einem computerlesbaren Programmcode zum Verarbeiten des Empfangs einer Meldung (M3), die einen Identifizierer aufweist und das Verarbeiten auf den Identifizierer bezogener Daten verlangt, und
- einem computerlesbaren Programmcode, um aus einer externen Datenbank (150), in der mehrere Daten in Beziehung zu mehreren Identifizieren gespeichert sind, mindestens einen Teil der darin in Beziehung zu dem Identifizieren gespeicherten Daten aufzurufen (R), um die empfangene Meldung entsprechend mindestens einem Teil der aufgerufenen Daten zu verarbeiten;
**dadurch gekennzeichnet,**
**dass** das Computerprogramm ferner aufweist:
- einen computerlesbaren Programmcode zum Empfangen einer Meldung (MR) mit der Aufforderung, Daten in Bezug auf einen Identifizierer zu speichern,
- einen computerlesbaren Programmcode, um aus der externen Datenbasis mindestens einen Teil der darin in Bezug auf den Identifizierer gespeicherten Daten aufzurufen (R), und
- einen computerlesbaren Programmcode zum Speichern mindestens eines Teils der aufgerufenen Daten in einer intern in dem Informations-Server angeordneten Datenbasis (303-2, RCD-X), um eine nachfolgende Meldung (M3,M6) zu verarbeiten, die das Verarbeiten auf den Identifizierer bezogener Daten entsprechend mindestens einem Teil der intern gespeicherten Daten verlangt.

## Revendications

1. Procédé de gestion de stockage de données comprenant les étapes de :
a) réception (410) dans un premier serveur d'informations (120) d'un message (M1) comprenant un premier identifiant, et
b) envoi (470) du premier serveur d'une réponse (M2) au dit message comprenant un deuxième identifiant stocké en relation avec ledit premier identifiant,
dans lequel le deuxième identifiant identifie un deuxième serveur d'informations (162) gérant des données stockées en relation avec ledit premier identifiant ;
**caractérisé en ce qu'**il comprend en outre les étapes de :
c) envoi (450) du premier serveur d'informatisons d'un message (MR) demandant de stocker dans un deuxième serveur d'informations des données en relation avec un premier identifiant lorsqu'il n'y a pas de deuxième identifiant stocké en relation avec ledit premier identifiant, et
d) stockage (460) par le premier serveur d'un identifiant du deuxième serveur prenant en charge ladite demande de stockage en tant que deuxième identifiant associé au dit premier identifiant.

2. Procédé selon la revendication 1, dans lequel l'étape c) comprend l'étape de :
c1) envoi dudit message de demande de stockage à un deuxième serveur sélectionné à partir dudit premier serveur.

3. Procédé selon la revendication 1, dans lequel l'étape c) comprend l'étape de :
c2) envoi (A) dudit message de demande de stockage à un serveur d'allocation dynamique (DHS) agencé pour sélectionner un deuxième serveur parmi une pluralité de deuxièmes serveurs, et comprenant en outre les étapes de :
e) envoi du serveur d'allocation dynamique à un deuxième serveur d'informations sélectionné à partir du serveur d'allocation d'un message (C) demandant de stocker dans ledit deuxième serveur des données en relation avec ledit premier identifiant, et
f) envoi du serveur d'allocation dynamique au premier serveur d'informations d'une réponse (B) au dit message de demande de stockage comprenant un identifiant du deuxième serveur sélectionné.

4. Procédé selon la revendication 1, comprenant en outre les étapes de :
g) en réponse à la réception du message de demande de stockage dans le deuxième serveur, extraction (R) d'une base de données externe (150) stockant une pluralité de données en relation avec une pluralité d'identifiants d'au moins une partie des données stockées dans celle-ci en relation avec le premier identifiant reçu,
h) stockage dans le deuxième serveur des données extraites en relation avec ledit premier identifiant.

5. Procédé selon la revendication 4, comprenant en outre les étapes de :
i) réception dans le deuxième serveur d'un message (MU, X) notifiant un changement d'une donnée stockée en relation avec ledit premier identifiant,
j) extraction de la base de données externe d'une donnée changée stockée dans celle-ci en relation avec ledit premier identifiant, et
k) stockage dans le deuxième serveur de la donnée changée extraite en relation avec ledit premier identifiant.

6. Procédé selon la revendication 1, comprenant en outre les étapes de :
l) envoi d'un message (MC) à un autre premier serveur d'informations (121) comprenant lesdits premier et deuxième identifiants, et
m) stockage dans ledit autre premier serveur d'informations dudit premier identifiant en relation avec ledit deuxième identifiant.

7. Procédé selon la revendication 1, dans lequel le premier serveur d'informations est un serveur de fonction d'emplacement d'abonnement ou un registre de numérotation flexible, et le deuxième serveur d'informations est un serveur d'abonné domestique ou un registre d'emplacement domestique.

8. Procédé selon la revendication 7, dans lequel l'étape a) comprend l'étape de :
a1) réception d'une interrogation (1) pour gérer un enregistrement d'un utilisateur identifié avec ledit premier identifiant.

9. Procédé selon la revendication 8, comprenant en outre les étapes de :
n) réception dans le serveur de fonction d'emplacement d'abonnement d'un message (G) comprenant un troisième identifiant qui identifie ledit utilisateur, et
p) stockage dans le serveur de fonction d'emplacement d'abonnement desdits premier et troisième identifiants en relation avec ledit deuxième identifiant, pour répondre à un autre message qui peut être reçu comprenant l'un quelconque desdits premier et troisième identifiants par un message comprenant ledit deuxième identifiant.

10. Procédé selon la revendication 8 ou 9, comprenant en outre les étapes de :
q) réception dans le serveur de fonction d'emplacement d'abonnement d'un message (I, M) notifiant un désenregistrement dudit utilisateur, et
r) suppression dans le serveur de fonction d'emplacement d'abonnement du deuxième identifiant stocké en relation avec un identifiant qui identifie ledit utilisateur.

11. Serveur d'informations (120) pour fournir une relation entre un premier identifiant (ID1X) et un deuxième identifiant (ID2X), comprenant un processeur (2010) et un dispositif de stockage (2031) en communication avec ledit processeur et stockant des instructions (203-1) aptes à être exécutées par ledit processeur pour :
- recevoir un message (M1) comprenant un premier identifiant, et
- envoyer une réponse (M2) au dit message comprenant un deuxième identifiant stocké en relation avec ledit premier identifiant, dans lequel le deuxième identifiant identifie un deuxième serveur d'informations (162) gérant des données stockées en relation avec ledit premier identifiant ;
**caractérisé en ce que** le dispositif de stockage stocke en outre des instructions aptes à être exécutées par ledit processeur pour :
- envoyer un message (MR) demandant de stocker dans un deuxième serveur d'informations des données en relation avec un premier identifiant lorsqu'il n'y a pas de deuxième identifiant stocké en relation avec ledit premier identifiant, et
- stocker un identifiant du deuxième serveur prenant en charge ladite demande de stockage en tant que deuxième identifiant associé au dit premier identifiant.

12. Serveur d'informations selon la revendication 11, dans lequel le dispositif de stockage stocke en outre des instructions aptes à être exécutées par ledit processeur pour envoyer ledit message de demande de stockage à un deuxième serveur sélectionné à partir dudit premier serveur.

13. Serveur d'informations selon la revendication 11, dans lequel le dispositif de stockage stocke en outre des instructions aptes à être exécutées par ledit processeur pour :
- envoyer ladite demande de stockage à un serveur d'allocation dynamique (DHS) agencé pour sélectionner un deuxième serveur parmi une pluralité de deuxièmes serveurs, et
- recevoir une réponse (B) au dit message de demande de stockage comprenant un identifiant du deuxième serveur sélectionné.

14. Serveur d'informations selon la revendication 11, dans lequel le dispositif de stockage stocke en outre des instructions aptes à être exécutées par ledit processeur pour envoyer un message (MC) comprenant lesdits premier et deuxième identifiants à un autre serveur d'informations (121) agencé pour fournir une relation entre un premier identifiant et un deuxième identifiant.

15. Serveur d'informations selon la revendication 11, dans lequel le deuxième serveur d'informations est un serveur d'abonné domestique ou un registre d'emplacement domestique, et dans lequel le dispositif de stockage stocke en outre des instructions aptes à être exécutées par ledit processeur pour fonctionner comme un serveur de fonction d'emplacement d'abonnement ou un registre de numérotation flexible.

16. Serveur d'informations selon la revendication 15, dans lequel le message reçu comprenant un premier identifiant est une interrogation (1) pour gérer un enregistrement d'un utilisateur identifié avec ledit premier identifiant.

17. Serveur d'informations selon la revendication 16, dans lequel le dispositif de stockage stocke en outre des instructions aptes à être exécutées par ledit processeur pour :
- recevoir un message (G) comprenant un troisième identifiant qui identifie ledit utilisateur, et
- stocker lesdits premier et troisième identifiants en relation avec ledit deuxième identifiant, pour répondre à un message suivant qui peut être reçu comprenant l'un quelconque desdits premier et troisième identifiants par un message comprenant ledit deuxième identifiant.

18. Serveur d'informations selon la revendication 16 ou 17, dans lequel le dispositif de stockage stocke en outre des instructions aptes à être exécutées par ledit processeur pour :
- recevoir un message (I, M) notifiant un désenregistrement dudit utilisateur, et
- supprimer le deuxième identifiant stocké en relation avec un identifiant qui identifie ledit utilisateur.

19. Serveur d'informations (162) pour gérer des données stockées en relation avec un identifiant (ID1X), comprenant un processeur (3010) et un dispositif de stockage (3031) en communication avec ledit processeur et stockant des instructions (303-1) aptes à être exécutées par ledit processeur pour :
- recevoir un message (M3) comprenant un identifiant et nécessitant un traitement de données associées au dit identifiant, et
- extraire (R) d'une base de données externe (150) stockant une pluralité de données en relation avec une pluralité d'identifiants au moins une partie des données stockées dans celle-ci en relation avec ledit identifiant reçu, de manière à traiter le message reçu en fonction d'au moins une partie des données extraites ;
**caractérisé en ce que** le dispositif de stockage stocke en outre des instructions aptes à être exécutées par ledit processeur pour :
- recevoir un message (MR) demandant de stocker des données en relation avec un identifiant,
- extraire (R) de la base de données externe au moins une partie des données stockées dans celle-ci en relation avec ledit identifiant, et
- stocker dans une base de données (303-2, RCD-X) interne au dit serveur d'informations au moins une partie des données extraites, de manière à traiter un message suivant (M3, M6) nécessitant un traitement de données associées au dit identifiant en fonction d'au moins une partie desdites données stockées en interne.

20. Serveur d'informations selon la revendication 19, dans lequel le dispositif de stockage stocke en outre des instructions aptes à être exécutées par ledit processeur pour :
- recevoir un message (MU, X) notifiant un changement d'une donnée stockée en relation avec ledit identifiant,
- extraire de la base de données externe une donnée changée stockée dans celle-ci en relation avec ledit identifiant, et
- stocker dans ladite base de données interne la donnée changée extraite en relation avec ledit identifiant.

21. Serveur d'informations selon la revendication 19, dans lequel le dispositif de stockage stocke en outre des instructions aptes à être exécutées par ledit processeur pour fonctionner comme un serveur d'abonné domestique ou un registre d'emplacement domestique.

22. Serveur d'informations selon la revendication 21, dans lequel le message comprenant un identifiant est une interrogation (1) pour gérer un enregistrement d'un utilisateur identifié avec ledit identifiant.

23. Serveur d'informations selon la revendication 22, dans lequel les données extraites de la base de données externe comprennent un autre identifiant qui identifie ledit utilisateur, et dans lequel le dispositif de stockage stocke en outre des instructions aptes à être exécutées par ledit processeur pour envoyer un message (F) comprenant un autre identifiant à un serveur de fonction d'emplacement d'abonnement.

24. Serveur d'informations selon la revendication 22 ou 23, dans lequel le dispositif de stockage stocke en outre des instructions aptes à être exécutées par ledit processeur pour :
- envoyer à un serveur de fonction d'emplacement d'abonnement un message (H) notifiant un désenregistrement dudit utilisateur, et
- supprimer de ladite base de données interne des données stockées en relation avec un identifiant qui identifie ledit utilisateur.

25. Programme informatique pour fournir une relation entre un premier identifiant et un deuxième identifiant dans un serveur d'informations basé sur ordinateur (120) comprenant :
- un code de programme lisible par ordinateur pour traiter la réception d'un message (M1) comprenant un premier identifiant, et
- un code de programme lisible par ordinateur pour envoyer une réponse (M2) au dit message comprenant un deuxième identifiant stocké en relation avec ledit premier identifiant, dans lequel le deuxième identifiant identifie un deuxième serveur d'informations (162) gérant des données stockées en relation avec ledit premier identifiant ;
**caractérisé en ce qu'**il comprend en outre :
- un code de programme lisible par ordinateur pour envoyer un message (MR) demandant de stocker dans un deuxième serveur d'informations des données en relation avec un premier identifiant lorsqu'il n'y a pas de deuxième identifiant stocké en relation avec ledit premier identifiant, et
- un code de programme lisible par ordinateur pour stocker un identifiant du deuxième serveur prenant en charge ladite demande de stockage en tant que deuxième identifiant associé au dit premier identifiant.

26. Programme informatique pour gérer des données stockées en relation avec un identifiant dans un serveur d'informations basé sur ordinateur (162) comprenant :
- un code de programme lisible par ordinateur pour traiter la réception d'un message (M3) comprenant un identifiant et nécessitant un traitement de données associées au dit identifiant, et
- un code de programme lisible par ordinateur pour extraire (R) d'une base de données externe (150) stockant une pluralité de données en relation avec une pluralité d'identifiants au moins une partie des données stockées dans celle-ci en relation avec ledit identifiant reçu, de manière à traiter le message reçu en fonction d'au moins une partie des données extraites ;
**caractérisé en ce qu'**il comprend en outre :
- un code de programme lisible par ordinateur pour traiter la réception d'un message (MR) demandant de stocker des données en relation avec un identifiant,
- un code de programme lisible par ordinateur pour extraire (R) de la base de données externe au moins une partie des données stockées dans celle-ci en relation avec ledit identifiant, et
- un code de programme lisible par ordinateur pour stocker dans une base de données (303-2, RCD-X) interne au dit serveur d'informations au moins une partie des données extraites, de manière à traiter un message suivant (M3, M6) nécessitant un traitement de données associées au dit identifiant en fonction d'au moins une partie desdites données stockées en interne.
